# EUROPEAN PATENT APPLICATION

(11) **EP 4 776 710 A1**
(43) Date of publication of application: **15.07.2026**
(21) Application number: 24886336.7
(22) Date of filing: 01.11.2024
(51) Int. Cl.: H04W 56/00, H04W 48/08, H04W 16/18, H04L 67/52, H04W 36/00, H04W 36/08, H04W 60/04, H04W 88/14

(54) **METHOD AND DEVICE FOR SELECTING AMF WHEN REQUESTING SYNCHRONIZATION FOR MULTIPLE UES CONSIDERING COVERAGE IN WIRELESS COMMUNICATION SYSTEM**

(30) Priority: 02.11.2023 KR 20230149692
(71) Applicant: Samsung Electronics Co., Ltd., Suwon-si, Gyeonggi-do 16677 (KR)
(72) Inventor: MOON, Sangjun, Suwon-si, Gyeonggi-do 16677 (KR)
(74) Representative: HGF
(86) International application number: PCT/KR2024/017024
(87) International publication number: WO 2025/095665

(57) **Abstract**

The present disclosure relates to a 5G or 6G communication system for supporting a higher data transmission rate. A method of a time sensitive communication time synchronization function (TSCTSF) according to an embodiment of the present disclosure may comprise the steps of: receiving a message related to synchronization from an application function (AF); discovering at least one access and mobility management function (AMF) through a network entity; transmitting, to the at least one AMF, a first message including information on user equipments (UEs); and receiving, from the at least one AMF, a second message including information on an area of interest (AOI) on the basis of the information on the UEs.

## Description

### [Technical Field]

The disclosure relates to a wireless communication system, and more particularly, to a method for providing time synchronization between wireless UEs in a wireless communication system using a 3GPP 5GS (5G System). In particular, the disclosure relates to a method for providing time synchronization between wireless UEs to a plurality of UEs using coverage conditions.

### [Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

### [Disclosure of Invention]

### [Technical Problem]

When a 3GPP network (5GS) serves as a synchronization source and provides a time synchronization service to UEs, or when coverage conditions are provided, it is necessary to identify a location of each UE, and thus location information of the UE may be obtained from an AMF. In this case, when a plurality of UEs are subject to the synchronization service, the location information of each UE is requested from an AMF with which the corresponding UE is registered. Thereafter, when the UE performs a handover involving a change of AMF, the sharing of the UE's location information with the previous AMF is released, and the location information of the UE is requested from a new AMF. That is, as the number of UEs subject to the synchronization service increases and as the mobility of the UEs increases, signaling caused by AMF changes increases, thereby imposing a burden on the network.

### [Solution to Problem]

According to the disclosure for solving the above problems, a method performed by a time sensitive communication time synchronization function (TSCTSF) in a wireless communication system may include receiving, from an application function (AF), a synchronization-related message; discovering at least one access and mobility management function (AMF) through a network entity; transmitting, to the at least one AMF, a first message including information on user equipments (UEs); and receiving, from the at least one AMF, a second message including information on an area of interest (AOI) based on the information on UEs.

In an embodiment, the information on UEs may include at least one of a UE identifier (ID) list, a group ID, or a data network name (DNN)/single network slice selection assistance information (S-NSSAI).

In an embodiment, the method further may include discovering the at least one AMF based on coverage conditions included in the synchronization-related message through the network entity.

In an embodiment, the information on UEs may include information on all AMFs.

Further, in another embodiment of the disclosure, a method performed by an access and mobility management function (AMF) in a wireless communication system may include receiving, from a time sensitive communication time synchronization function (TSCTSF), a first message including information on user equipments (UEs); identifying whether a condition included in the information on UEs is satisfied; and transmitting, to the TSCTSF, a second message including information on an area of interest (AOI) based on the information on UEs, wherein the AMF may be discovered through a network entity, and a synchronization-related message may be transmitted from an application function (AF) to the TSCTSF.

Further, in another embodiment of the disclosure, a time sensitive communication time synchronization function (TSCTSF) in a wireless communication system may include a transceiver configured to transmit and receive at least one signal; and a controller coupled to the transceiver, wherein the controller may be configured to receive, from an application function (AF), a synchronization-related message, discover at least one access and mobility management function (AMF) through a network entity, transmit, to the at least one AMF, a first message including information on user equipments (UEs), and receive, from the at least one AMF, a second message including information on an area of interest (AOI) based on the information on UEs.

Further, in another embodiment of the disclosure, an access and mobility management function (AMF) in a wireless communication system may include a transceiver configured to transmit and receive at least one signal; and a controller coupled to the transceiver, wherein the controller may be configured to receive, from a time sensitive communication time synchronization function (TSCTSF), a first message including information on user equipments (UEs), identify whether a condition included in the information on UEs is satisfied, and transmit, to the TSCTSF, a second message including information on an area of interest (AOI) based on the information on UEs, wherein the AMF may be discovered through a network entity, and a synchronization-related message may be transmitted from an application function (AF) to the TSCTSF.

### [Advantageous Effects of Invention]

According to an embodiment of the disclosure, when a 5GS serves as a synchronization (sync) source and provides a sync service to UEs together with coverage conditions, additional signaling that would otherwise occur each time a UE performs a handover between AMFs can be eliminated, thereby preventing a burden on the network, even when the sync service is provided to a plurality of UEs.

### [Brief Description of Drawings]

FIG. 1 is a diagram illustrating the case where coverage conditions are added when providing 5GS sync through a 3GPP network.
FIG. 2A is a signal flow diagram illustrating an area of interest subscription for each UE in a list of UEs targeted for a sync service.
FIG. 2B is a signal flow diagram illustrating an operation of an area of interest subscription for each UE in a list of UEs targeted for a sync service when an inter-AMF handover occurs.
FIG. 3A is a signal flow diagram illustrating an area of interest subscription for each UE in a group targeted for a sync service.
FIG. 3B is a signal flow diagram illustrating an operation of an area of interest subscription for each UE in a group targeted for a sync service when an inter-AMF handover occurs.
FIG. 4A is a signal flow diagram illustrating an area of interest subscription for a UE associated with a DNN/S-NSSAI targeted for a sync service.
FIG. 4B is a signal flow diagram illustrating an area of interest subscription for a UE associated with a DNN/S-NSSAI targeted for a sync service.
FIG. 4C is a signal flow diagram illustrating an operation of an area of interest subscription for a UE associated with a DNN/S-NSSAI targeted for a sync service when an inter-AMF handover occurs.
FIG. 5A is a signal flow diagram illustrating an operation of an area of interest subscription for each UE in a list of UEs targeted for a sync service when an All-AMF indication is applied.
FIG. 5B is a signal flow diagram illustrating an operation of an area of interest subscription for each UE in a list of UEs targeted for a sync service when an All-AMF indication is applied.
FIG. 5C is a signal flow diagram illustrating an operation of an area of interest subscription for each UE in a list of UEs targeted for a sync service when an All-AMF indication is applied and an inter-AMF handover occurs.
FIG. 6A is a signal flow diagram illustrating an operation of an area of interest subscription for each UE in a group targeted for a sync service when an All-AMF indication is applied.
FIG. 6B is a signal flow diagram illustrating an operation of an area of interest subscription for each UE in a group targeted for a sync service when an All-AMF indication is applied.
FIG. 6C is a signal flow diagram illustrating an operation of an area of interest subscription for each UE in a group targeted for a sync service when an All-AMF indication is applied and an inter-AMF handover occurs.
FIG. 7A is a signal flow diagram illustrating an operation of an area of interest subscription for each UE associated with a DNN/S-NSSAI targeted for a sync service when an All-AMF indication is applied.
FIG. 7B is a signal flow diagram illustrating an operation of an area of interest subscription for each UE associated with a DNN/S-NSSAI targeted for a sync service when an All-AMF indication is applied.
FIG. 7C is a signal flow diagram illustrating an operation of an area of interest subscription for each UE associated with a DNN/S-NSSAI targeted for a sync service when an All-AMF indication is applied and an inter-AMF handover occurs.
FIG. 8 is a block diagram illustrating a structure of a UE according to an embodiment of the disclosure.
FIG. 9 is a block diagram illustrating a structure of a network entity according to an embodiment of the disclosure.

### [Mode for the Invention]

Hereinafter, the principles of operation of the disclosure will be described in detail with reference to the accompanying drawings. In the following description of the disclosure, a detailed description of related known functions or constitutions will be omitted when it is determined that such description would unnecessarily obscure the gist of the disclosure. Further, the terms used hereinafter are defined in consideration of the functions of the disclosure, and may vary according to the intention or practice of a user or an operator. Accordingly, the definitions of such terms should be construed based on the contents throughout this specification.

In the following description, terms for identifying access nodes, terms referring to network entities, terms referring to messages, terms referring to interfaces between network entities, terms referring to various types of identification information, and the like are exemplary and provided for convenience of description. Accordingly, the disclosure is not limited to the terms described below, and other terms having equivalent technical meanings may be used.

Hereinafter, for convenience of description, the disclosure uses terms and names defined in the 5GS and NR standards, which are the latest standards defined by the 3rd Generation Partnership Project (3GPP) among currently available communication standards. However, the disclosure is not limited to the terms and names described above, and may also be applied to wireless communication networks according to other standards. In particular, the disclosure may be applied to 3GPP 5GS/NR (5th generation mobile communication standards).

When used in applications such as smart grids, accurate time synchronization between UEs is required. A sync service may be provided only within a specific area. Outside the area, the service may not be provided, or a different type of sync service may need to be provided. Accurate time synchronization between UEs is also required for factory automation. Applications that share audio/video also require accurate time synchronization between UEs. Financial applications also require accurate time synchronization. For example, stock trading UEs need to perform stock buying and selling based on accurate time synchronization.

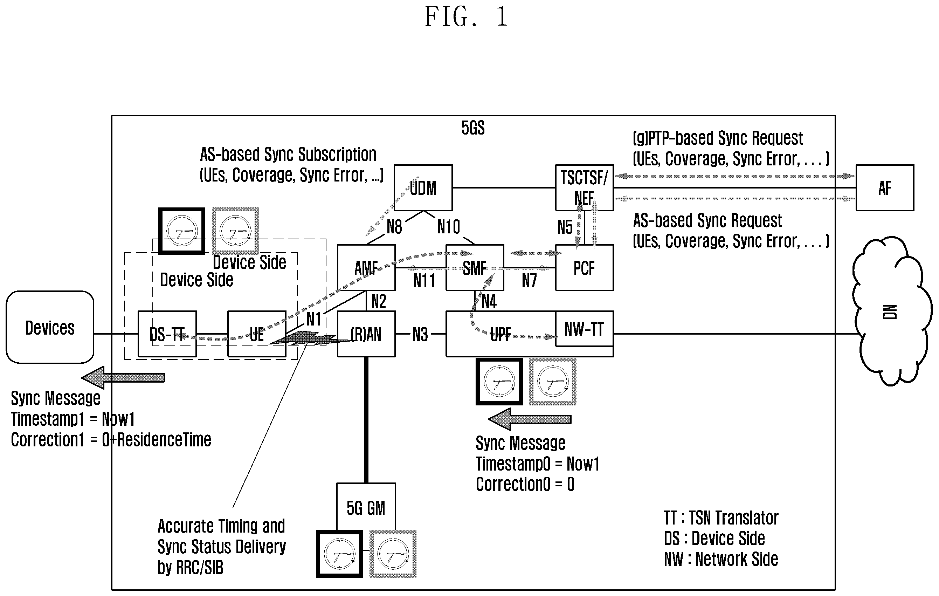

FIG. 1 is a diagram illustrating the case where coverage conditions are added when providing 5GS sync through a 3GPP network.

A 5G system (5GS) may provide a sync service to UEs in response to a request from an application function (AF). The 5GS may interwork with an external AF through a time sensitive communications and time synchronization function (TSCTSF)/network exposure function (NEF). In this case, the TSCTSF/NEF may exchange management information with a network-side TSN translator (NW-TT) and a device-side TSN translator (DS-TT). The NW-TT may periodically generate sync messages for synchronization and transmit the sync messages including time information to the DS-TT. Further, the TSCTSF/NEF may interwork with a session management function (SMF), an access and mobility management function (AMF), a policy control function (PCF), a unified data management (UDM)/user data repository (UDR), and the like, in order to transmit information of the 5GS to an external AF or to apply requests from the external AF to the 5GS system. In particular, the TSCTSF/NEF may store necessary information in the UDR, and transfer updated information to the UDM/UDR or the PCF through a notification procedure. Such a method may be referred to as a (g)PTP-based synchronization method.

The 5GS may also support time synchronization between UEs by transferring an AF request to a 5G radio access network (RAN) and controlling radio resource control (RRC) or system information blocks (SIBs). Such a method may be referred to as an access stratum (AS)-based synchronization method. A transmission frequency of RRC/SIBs for transferring time information may be increased to meet required accuracy. A base station may control time synchronization accuracy by adjusting a periodicity of exchanging RRC messages used to measure latency between a specific UE and the base station, thereby allowing the latency to be measured more precisely. Further, the base station may control time synchronization accuracy by adjusting a transmission periodicity of SIBs including time information that are broadcast to all UEs.

A synchronization request from the AF may be made as either a (g)PTP-based request or an AS-based request, but the AF is not aware of internal status information of the 5GS, such as supportable synchronization accuracy, a number of corresponding UEs, or whether the corresponding UEs are in an idle/active state. Therefore, even when the AF makes a (g)PTP-based request, the request may need to be handled using AS-based 5GS synchronization. Even when the AF makes an AS-based request, the request may need to be handled using (g)PTP-based 5GS synchronization. Alternatively, even when the AF makes a request based on NAS or AS, both AS-based 5GS synchronization and (g)PTP-based 5GS synchronization may need to be performed.

Provision of 5GS synchronization may be based on subscription data stored in a UDM. In addition to conditions such as a sync service subscription status of each UE and a sync error budget, coverage conditions may also be included.

A method for designating UEs targeted for a sync service may include designating a single UE, a list of multiple UEs, a group of UEs identifiable by an internal group ID, UEs with a DNN/S-NSSAI, and the like.

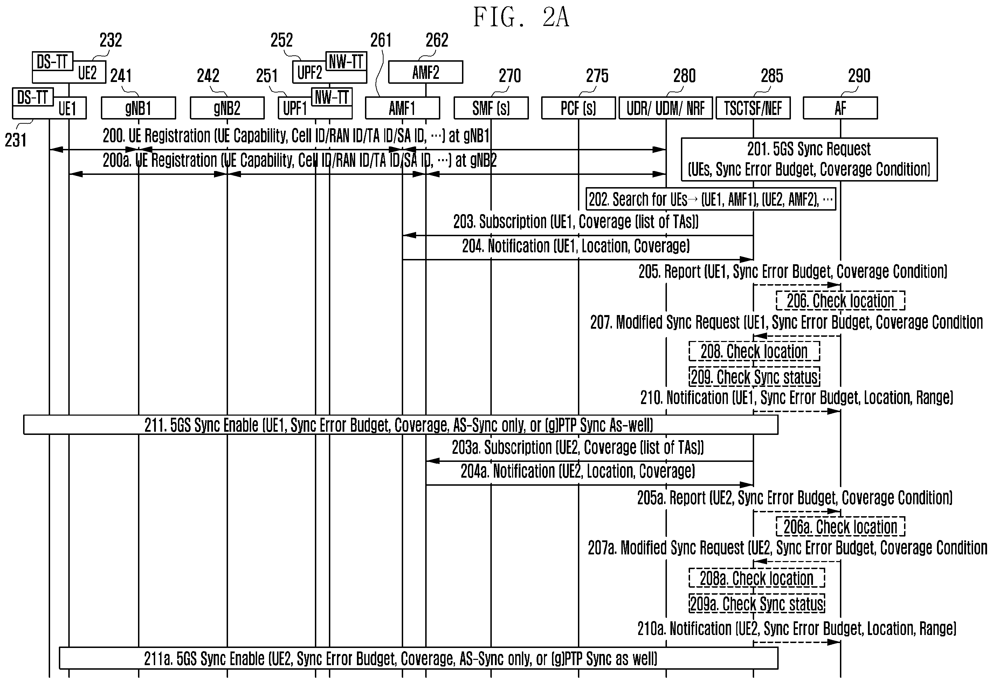

FIG. 2A is a signal flow diagram illustrating an area of interest subscription for each UE in a list of UEs targeted for a sync service.

With reference to FIG. 2A, when the sync service has a coverage condition and targets a list of UEs, the 5GS may request an area of interest for each UE to an AMF.

In step 200, a UE1 231 may access a gNB1 241 and perform registration with an AMF1 261. In this case, a UE capability, a cell ID/RAN ID/TA ID/SA ID, and the like may be included. The AMF1 261 that has received a registration request from the UE1 231 may identify subscriber information through a UDM and store related subscription context at the AMF. Further, the AMF may transmit the related context to the gNB1 241, transmit a registration response to the UE1 231, and complete the remaining registration procedure.

In step 200a, a UE2 232 may access a gNB2 242 and perform registration with an AMF2 262. In this case, a UE capability, a cell ID/RAN ID/TA ID/SA ID, and the like may be included. The AMF2 262 that has received a registration request from the UE2 232 may identify subscriber information through the UDM and store related subscription context at the AMF. Further, the AMF may transmit the related context to the gNB2 242, transmit a registration response to the UE2 232, and complete the remaining registration procedure.

In step 201, an AF 290 may transmit a 5GS sync request for target UEs to a time sensitive communications and time synchronization function (TSCTSF)/network exposure function (NEF) 285. The 5GS sync request may include required synchronization accuracy as a sync error budget. Further, the request may specify coverage to which the sync service is to be applied. The target UEs may be indicated by a UE ID list, a group ID, or a data network name (DNN)/single network slice selection assistance information (S-NSSAI). Further, the request may include an RA adjust request. In this case, the TSCTSF/NEF may derive TA IDs satisfying the coverage condition and manage the derived TA IDs as a TA List. In the embodiment, the target of the sync service is provided as a UE list.

In step 202, the TSCTSF/NEF 285 may determine, from the UDM, the AMF with which each target UE is registered. In this step, the TSCTSF/NEF 285 may obtain location information of the AMF using the NRF. For example, the TSCTSF may determine that the UE1 is located in the AMF1 and the UE2 is located in the AMF2. In this step, the TSCTSF may request notification when the AMF in which the UEs are located has changed. Thereafter, the TSCTSF may request an area of interest for each UE to each AMF.

In step 203, the TSCTSF 285 may request the AMF1 261 to notify location information of the UE1 231 and information on whether the UE1 231 belongs to an area of interest (AOI). In this case, the location of the UE may be converted and used based on a TA ID list known in 3GPP.

In step 204, the AMF1 261 may notify the TSCTSF/NEF 285 of the current location of the UE1, whether the location satisfies the coverage condition, and subscription status of the UE1.

In step 205, the TSCTSF/NEF 285 may report a current status of the sync request to the AF 290. In this case, the report may include the UE1, a sync error budget, a coverage condition, and the like.

In step 206, the AF 290 may identify again whether the sync error budget or the coverage condition is satisfied using the report of step 205, and if necessary, transmit a modified sync service request to the TSCTSF/NEF 285.

In step 207, the AF 290 may transmit a modified sync service request to the TSCTSF/NEF 285. In this case, the modified sync service request may include the UE1, a sync error budget, and a coverage condition.

In step 208, the TSCTSF 285 may identify again whether the coverage condition is satisfied.

In step 209, the TSCTSF 285 may check again whether the requested sync error budget may be satisfied through the sync error budget of the RAN transferred via the AMF1 261.

In step 210, the TSCTSF/NEF 285 may notify the AF 290 of the current status of the sync request. In this case, the notification may include the UE1, a sync error budget, a location, a range, and the like.

In step 211, the TSCTSF 285 may apply a sync service to the UE1. In this case, a request from the TSCTSF may be transmitted to the AMF via the PCF. The AMF may apply the request to the gNB1 to which the UE1 belongs, thereby applying only a sync service using RAN technologies, such as SIB broadcasting and RRC signaling, between the gNB1 and the UE1. Alternatively, the TSCTSF may additionally apply a (g)PTP-based sync service by transmitting signals to an NW-TT and a DS-TT, such that sync messages are periodically transferred from an NW-TT of the UPF1 to a DS-TT of the UE1 simultaneously with the sync service using RAN technologies. This process is as described with reference to FIG. 1.

In step 203a, the TSCTSF 285 may request the AMF2 262 to notify information on a location of the UE2 232 and whether the UE2 232 belongs to an AoI. In this case, the location of the UE may be converted and used based on a TA ID list known in 3GPP.

In step 204a, the AMF2 262 may notify the TSCTSF/NEF 285 of the current location of the UE2, whether the location satisfies the coverage condition, and subscription status of the UE2.

In step 205a, the TSCTSF/NEF 285 may report a current status of the sync request to the AF 290. In this case, the report may include the UE2, a sync error budget, a coverage condition, and the like.

In step 206a, the AF 290 may identify again whether the sync error budget or the coverage condition is satisfied using the report of step 205a, and if necessary, transmit a modified sync service request to the TSCTSF/NEF 285.

In step 207a, the AF 290 may transmit a modified sync service request to the TSCTSF/NEF 285. In this case, the modified sync service request may include the UE2, a sync error budget, and a coverage condition.

In step 208a, the TSCTSF 285 may identify again whether the coverage condition is satisfied.

In step 209a, the TSCTSF 285 may check again whether the requested sync error budget may be satisfied through the sync error budget of the RAN transferred via the AMF2 262.

In step 210a, the TSCTSF/NEF 285 may notify the AF 290 of the current status of the sync request. In this case, the notification may include the UE2, a sync error budget, a location, a range, and the like.

In step 211a, the TSCTSF 285 may apply a sync service to the UE2. In this case, a request from the TSCTSF may be transmitted to the AMF2 via the PCF. The AMF2 may apply the request to the gNB2 to which the UE2 belongs, thereby applying only a sync service using RAN technologies, such as SIB broadcasting and RRC signaling, between the gNB2 and the UE2. Alternatively, the TSCTSF may additionally apply a (g)PTP-based sync service by transmitting signals to an NW-TT and a DS-TT, such that sync messages are periodically transferred from an NW-TT of the UPF2 to a DS-TT of the UE2 simultaneously with the sync service using RAN technologies. This process is as described with reference to FIG. 1.

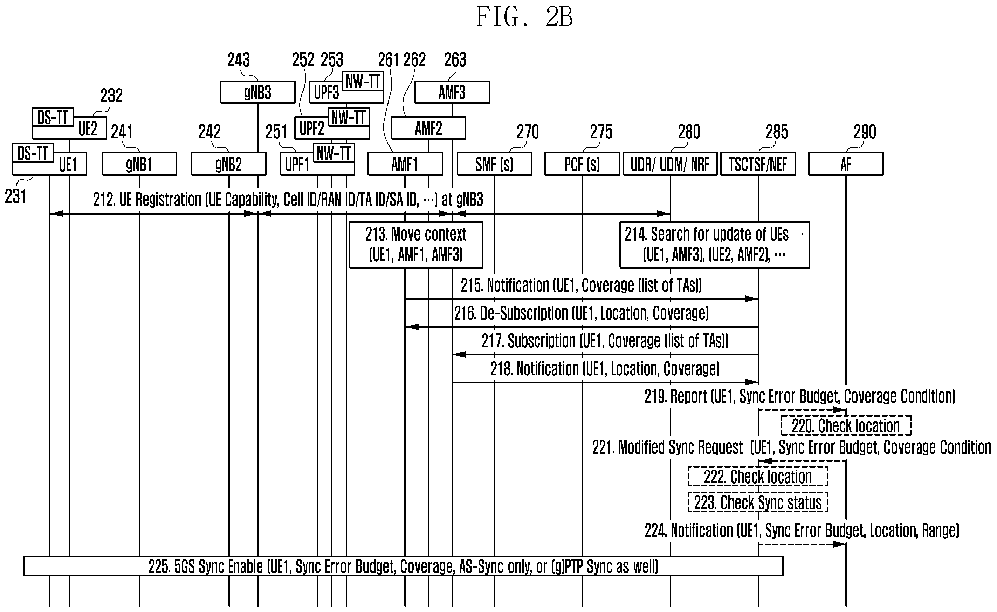

FIG. 2B is a signal flow diagram illustrating an operation of an area of interest subscription for each UE in a list of UEs targeted for a sync service when an inter-AMF handover occurs.

With reference to FIG. 2B, when the UE moves beyond an area of the AMF, subscription/de-subscription signaling for an area of interest subscription may occur simultaneously. In this case, as the number of target UEs increases or the mobility of the UEs increases, a signaling load may also increase, which may cause a problem.

In step 212, the UE1 231 may move from the gNB1 241 to a gNB3 243 and from an area of the AMF1 261 to an area of an AMF3 263, and perform registration with the AMF3.

In step 213, UE context information may be transferred between the AMF1 261 and the AMF3 263 according to a handover of the UE1.

In step 214, an UDM/UDR 280 may be updated according to an AMF change of the UE1 and notify the TSCTSF 285 of the update. That is, the UDM/UDR 280 may notify the TSCTSF 285 that a registration location of the UE1 231 has been changed from the AMF1 261 to the AMF3 263.

In step 215, the AMF1 261 may notify the TSCTSF 285 of a location change of the UE1. In this case, the notification may include the UE1 and coverage (a list of TAs).

In step 216, the TSCTSF 285 may unsubscribe from a location notification subscription for the UE1 with the AMF1 261. In this case, a de-subscription request may include the UE1, a location, and coverage.

In step 217, the TSCTSF 285 may request a location notification subscription for the UE1 to the AMF3 263. In this case, the subscription request may include the UE1, a location, and coverage.

In step 218, the AMF3 263 may notify the TSCTSF/NEF 285 of the current location of the UE1, whether the location satisfies the coverage condition, and subscription status of the UE1.

In step 219, the TSCTSF/NEF 285 may report a current status of the sync request to the AF 290. In this case, the report may include the UE1, a sync error budget, a coverage condition, and the like.

In step 220, the AF 290 may identify again whether the sync error budget or the coverage condition is satisfied using the report of step 219, and if necessary, transmit a modified sync service request to the TSCTSF/NEF 285.

In step 221, the AF 290 may transmit a modified sync service request to the TSCTSF/NEF 285. In this case, the modified sync service request may include the UE1, a sync error budget, and a coverage condition.

In step 222, the TSCTSF 285 may identify again whether the coverage condition is satisfied.

In step 223, the TSCTSF 285 may check again whether the requested sync error budget may be satisfied through the sync error budget of the RAN transferred via the AMF1 261.

In step 224, the TSCTSF/NEF 285 may notify the AF 290 of the current status of the sync request. In this case, the notification may include the UE1, a sync error budget, a location, a range, and the like.

In step 225, the TSCTSF 285 may apply a sync service to the UE1. In this case, a request from the TSCTSF may be transmitted to the AMF via the PCF. The AMF may apply the request to the gNB1 to which the UE1 belongs, thereby applying only a sync service using RAN technologies, such as SIB broadcasting and RRC signaling, between the gNB1 and the UE1. Alternatively, the TSCTSF may additionally apply a (g)PTP-based sync service by transmitting signals to an NW-TT and a DS-TT, such that sync messages are periodically transferred from an NW-TT of the UPF1 to a DS-TT of the UE1 simultaneously with the sync service using RAN technologies. This process is as described with reference to FIG. 1.

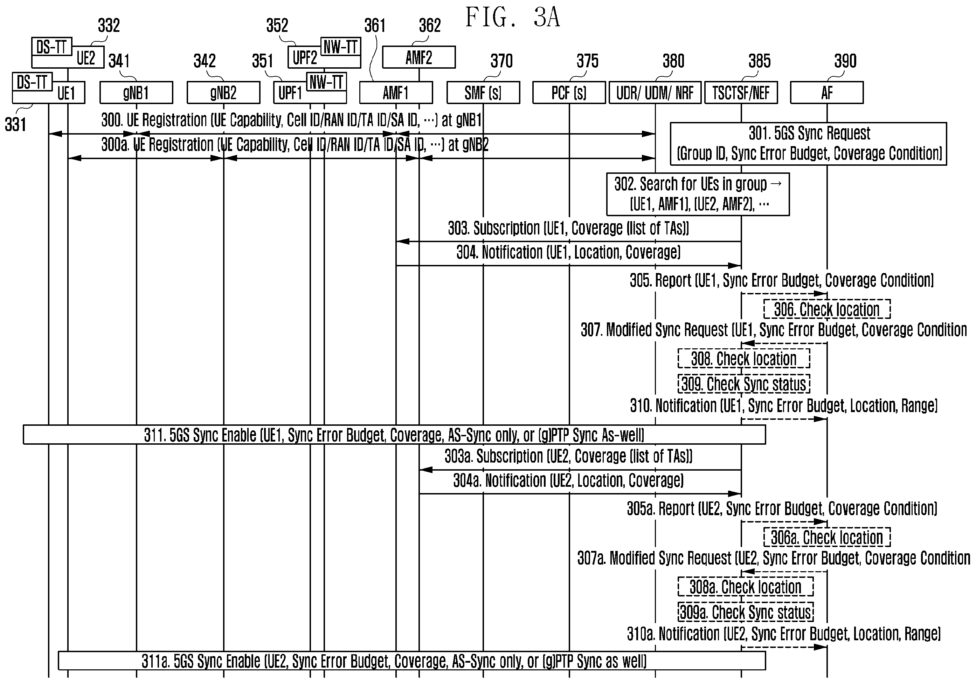

FIG. 3A is a signal flow diagram illustrating an area of interest subscription for each UE in a group targeted for a sync service.

With reference to FIG. 3A, when the sync service has a coverage condition and targets a list of UEs identified by an internal group identifier, the 5GS may request an area of interest for each UE to the AMF.

In step 300, a UE1 331 may access a gNB1 341 and perform registration with an AMF1 361. In this case, a UE capability, a cell ID/RAN ID/TA ID/SA ID, and the like may be included. The AMF1 361 that has received a registration request from the UE1 331 may identify subscriber information through the UDM and store related subscription context at the AMF. Further, the AMF may transmit the related context to the gNB1 341, transmit a registration response to the UE1 331, and complete the remaining registration procedure.

In step 300a, a UE2 332 may access a gNB2 342 and perform registration with an AMF2 362. In this case, a UE capability, a cell ID/RAN ID/TA ID/SA ID, and the like may be included. The AMF2 362 that has received a registration request from the UE2 332 may identify subscriber information through the UDM and store related subscription context at the AMF. Further, the AMF may transmit the related context to the gNB2 342, transmit a registration response to the UE2 332, and complete the remaining registration procedure.

In step 301, an AF 390 may transmit a 5GS sync request for target UEs to a time sensitive communications and time synchronization function (TSCTSF)/network exposure function (NEF) 385. The request may include required synchronization accuracy as a sync error budget. Further, the request may specify coverage to which the sync service is to be applied. The target UEs may be indicated by a UE ID list, a group ID, or a data network name (DNN)/single network slice selection assistance information (S-NSSAI). Further, the request may include an RA adjust request. In this case, the TSCTSF/NEF may derive TA IDs satisfying the coverage condition and manage the derived TA IDs as a TA list. In this example, the target of the sync service is provided as a group ID. The group ID provided by the AF may be an external group ID usable outside the 5GS, and the NEF or the TSCTSF may convert the external group ID into an internal group ID, or the external group ID may be converted into the internal group ID by the UDM.

In step 302, the TSCTSF/NEF 385 may determine, from the UDM, the AMF with which each UE of a group identified by a group ID is registered. In this step, the TSCTSF/NEF 385 may obtain location information of the AMF using the NRF. For example, the TSCTSF 385 may determine that the UE1 is located in the AMF1 and the UE2 is located in the AMF2. In this step, the TSCTSF 385 may request notification when the AMF in which the UEs are located has changed. Thereafter, the TSCTSF 385 may request an area of interest for each UE to each AMF.

In step 303, the TSCTSF 385 may request the AMF1 361 to notify information on a location of the UE1 and whether the UE1 belongs to an AoI. In this case, the location of the UE may be converted and used based on a TA ID list known in 3GPP.

In step 304, the AMF1 361 may notify the TSCTSF/NEF 385 of the current location of the UE1, whether the location satisfies the coverage condition, and subscription status of the UE1.

In step 305, the TSCTSF/NEF 385 may report a current status of the sync request to the AF 390. In this case, the report may include the UE1, a sync error budget, a coverage condition, and the like.

In step 306, the AF 390 may identify again whether the sync error budget or the coverage condition is satisfied using the report of step 305, and if necessary, transmit a modified sync service request to the TSCTSF/NEF 385.

In step 307, the AF 390 may transmit a modified sync service request to the TSCTSF/NEF 385. In this case, the modified sync service request may include the UE1, a sync error budget, and a coverage condition.

In step 308, the TSCTSF 385 may identify again whether the coverage condition is satisfied.

In step 309, the TSCTSF 385 may check again whether the requested sync error budget may be satisfied through the sync error budget of the RAN transferred via the AMF1 361.

In step 310, the TSCTSF/NEF 385 may notify the AF 390 of the current status of the sync request. In this case, the notification may include the UE1, a sync error budget, a location, a range, and the like.

In step 311, the TSCTSF 385 may apply a sync service to the UE1. In this case, a request from the TSCTSF may be transmitted to the AMF via the PCF. The AMF may apply the request to the gNB1 to which the UE1 belongs, thereby applying only a sync service using RAN technologies, such as SIB broadcasting and RRC signaling, between the gNB1 and the UE1. Alternatively, the TSCTSF may additionally apply a (g)PTP-based sync service by transmitting signals to an NW-TT and a DS-TT, such that sync messages are periodically transferred from an NW-TT of the UPF1 to a DS-TT of the UE1 simultaneously with the sync service using RAN technologies. This process is as described with reference to FIG. 1.

In step 303a, the TSCTSF 385 may request the AMF2 362 to notify information on a location of the UE2 332 and whether the UE2 332 belongs to an AoI. In this case, the location of the UE may be converted and used based on a TA ID list known in 3GPP.

In step 304a, the AMF2 362 may notify the TSCTSF/NEF 385 of the current location of the UE2, whether the location satisfies the coverage condition, and subscription status of the UE2.

In step 305a, the TSCTSF/NEF 385 may report a current status of the sync request to the AF 390. In this case, the report may include the UE2, a sync error budget, a coverage condition, and the like.

In step 306a, the AF may identify again whether the sync error budget or the coverage condition is satisfied using the report of step 305a, and if necessary, transmit a modified sync service request to the TSCTSF/NEF 385.

In step 307a, the AF 390 may transmit a modified sync service request to the TSCTSF/NEF 385. In this case, the modified sync service request may include the UE2, a sync error budget, and a coverage condition.

In step 308a, the TSCTSF 385 may identify again whether the coverage condition is satisfied.

In step 309a, the TSCTSF 385 may check again whether the requested sync error budget may be satisfied through the sync error budget of the RAN transferred via the AMF2 362.

In step 310a, the TSCTSF/NEF 385 may notify the AF 390 of the current status of the sync request. In this case, the notification may include the UE2, a sync error budget, a location, a range, and the like.

In step 311a, the TSCTSF 385 may apply a sync service to the UE2. In this case, a request from the TSCTSF may be transmitted to the AMF2 via the PCF. The AMF2 may apply the request to the gNB2 to which the UE2 belongs, thereby applying only a sync service using RAN technologies, such as SIB broadcasting and RRC signaling, between the gNB2 and the UE2. Alternatively, the TSCTSF may additionally apply a (g)PTP-based sync service by transmitting signals to an NW-TT and a DS-TT, such that sync messages are periodically transferred from an NW-TT of the UPF2 to a DS-TT of the UE2 simultaneously with the sync service using RAN technologies. This process is as described with reference to FIG. 1.

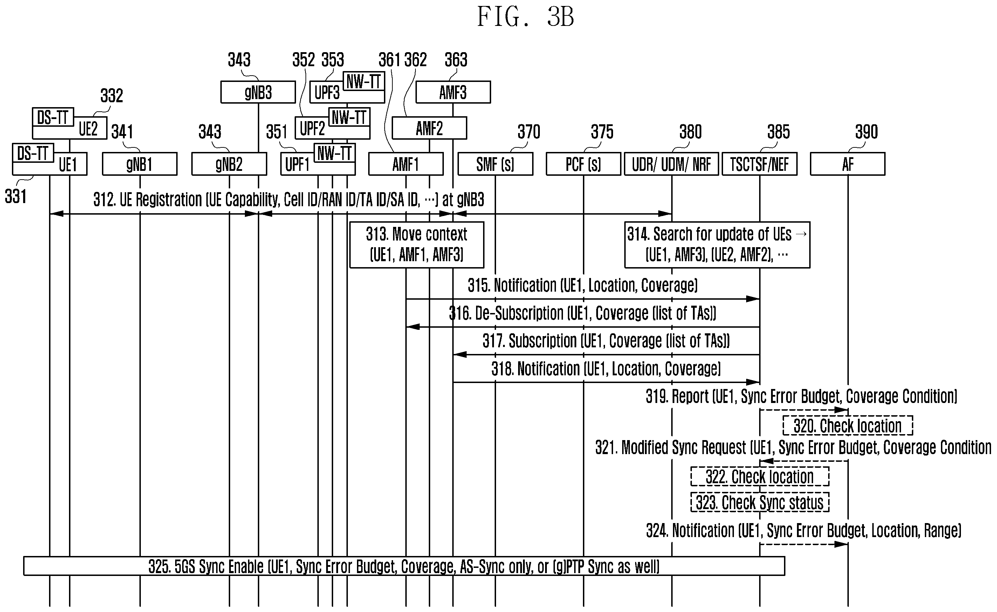

FIG. 3B is a signal flow diagram illustrating an operation of an area of interest subscription for each UE in a group targeted for a sync service when an inter-AMF handover occurs.

With reference to FIG. 3B, when the UE moves beyond an area of the AMF, subscription/de-subscription signaling for an area of interest subscription may occur simultaneously. In this case, as the number of UEs within a group identified by a group ID increases or the mobility of the UEs increases, a signaling load may also increase, which may cause a problem.

In step 312, the UE1 331 may move from the gNB1 341 to a gNB3 343 and from an area of the AMF1 361 to an area of an AMF3 363, and perform registration with the AMF3 363.

In step 313, UE context information may be transferred between the AMF1 361 and the AMF3 363 according to a handover of the UE1.

In step 314, a UDM/UDR 380 may be updated according to an AMF change of the UE1 and notify the TSCTSF 385 of the update. That is, the UDM/UDR 380 may notify the TSCTSF 385 that a registration location of the UE1 331 has been changed from the AMF1 361 to the AMF3 363.

In step 315, the AMF1 361 may notify the TSCTSF 385 of a location change of the UE1. In this case, the notification may include the UE1 and coverage (a list of TAs).

In step 316, the TSCTSF 385 may unsubscribe from a location notification subscription for the UE1 with the AMF1 361. In this case, a de-subscription request may include the UE1, a location, and coverage.

In step 317, the TSCTSF 385 may request a location notification subscription for the UE1 to the AMF3 363. In this case, the subscription request may include the UE1, a location, and coverage.

In step 318, the AMF3 363 may notify the TSCTSF/NEF 385 of the current location of the UE1, whether the location satisfies the coverage condition, and subscription status of the UE1.

In step 319, the TSCTSF/NEF 385 may report a current status of the sync request to the AF 390. In this case, the report may include the UE1, a sync error budget, a coverage condition, and the like.

In step 320, the AF 390 may identify again whether the sync error budget or the coverage condition is satisfied using the report of step 319, and if necessary, transmit a modified sync service request to the TSCTSF/NEF 385.

In step 321, the AF 390 may transmit a modified sync service request to the TSCTSF/NEF 385. In this case, the modified sync service request may include the UE1, a sync error budget, and a coverage condition.

In step 322, the TSCTSF 385 may identify again whether the coverage condition is satisfied.

In step 323, the TSCTSF 385 may check again whether the requested sync error budget may be satisfied through the sync error budget of the RAN transferred via the AMF1 361.

In step 324, the TSCTSF/NEF 385 may notify the AF 390 of the current status of the sync request. In this case, the notification may include the UE1, a sync error budget, a location, a range, and the like.

In step 325, the TSCTSF 385 may apply a sync service to the UE1. In this case, a request from the TSCTSF may be transmitted to the AMF via the PCF. The AMF may apply the request to the gNB1 to which the UE1 belongs, thereby applying only a sync service using RAN technologies, such as SIB broadcasting and RRC signaling, between the gNB1 and the UE1. Alternatively, the TSCTSF may additionally apply a (g)PTP-based sync service by transmitting signals to an NW-TT and a DS-TT, such that sync messages are periodically transferred from an NW-TT of the UPF1 to a DS-TT of the UE1 simultaneously with the sync service using RAN technologies. This process is as described with reference to FIG. 1.

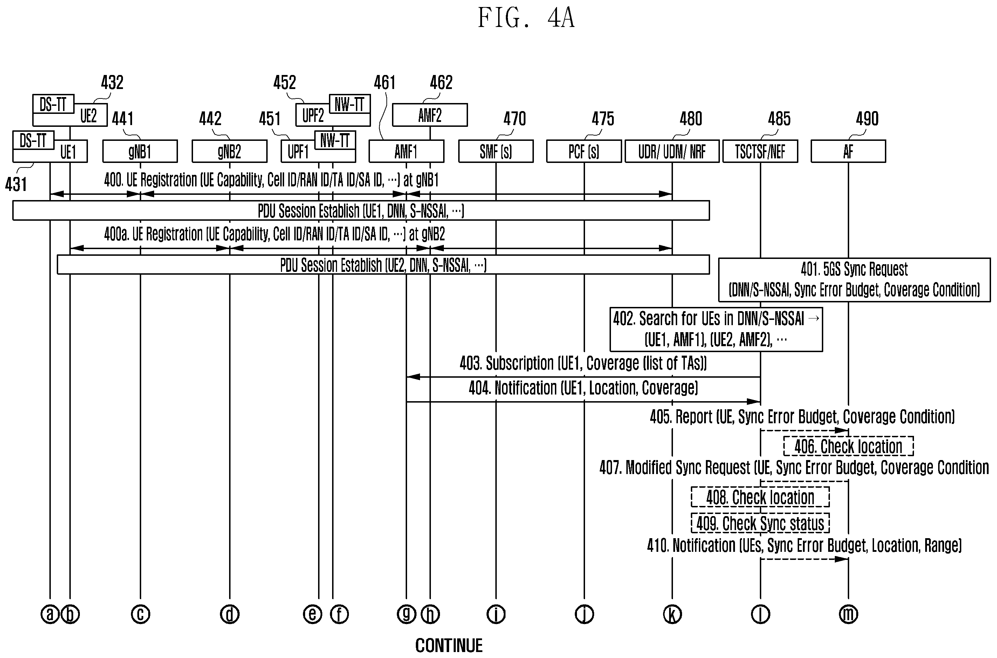

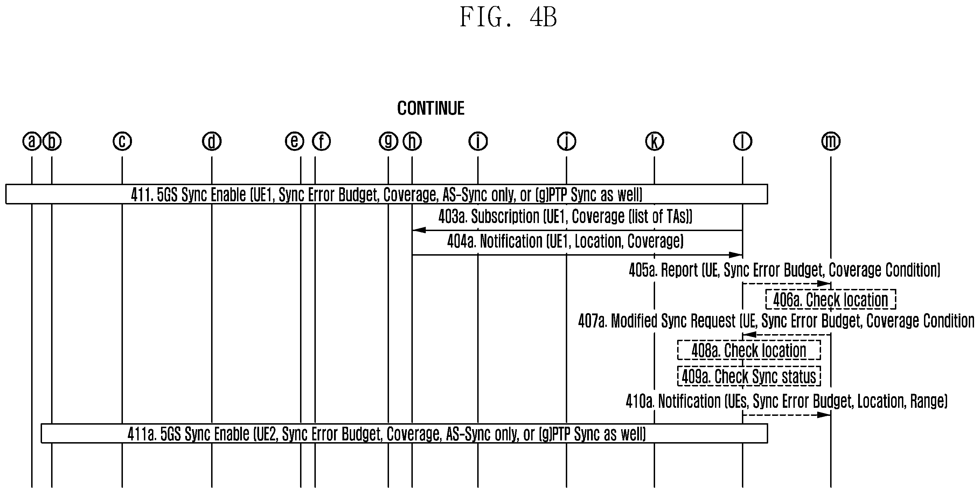

FIGS. 4A and 4B are signal flow diagrams illustrating an area of interest subscription for a UE associated with a DNN/S-NSSAI targeted for a sync service.

With reference to FIGS. 4A and 4B, when the sync service has a coverage condition and targets UEs having a DNN/S-NSSAI, the 5GS may request an area of interest for each UE to the AMF.

In step 400, a UE1 431 may access a gNB1 441 and perform registration with an AMF1 461. In this case, a UE capability, a cell ID/RAN ID/TA ID/SA ID, and the like may be included. The AMF1 461 that has received a registration request from the UE1 431 may identify subscriber information through the UDM and store related subscription context at the AMF. Further, the AMF may transmit the related context to the gNB1 441, transmit a registration response to the UE1 431, and complete the remaining registration procedure. Subsequently, the UE1 may establish a PDU session associated with a DNN/S-NSSAI.

In step 400a, a UE2 432 may access a gNB2 442 and perform registration with an AMF2 462. In this case, a UE capability, a cell ID/RAN ID/TA ID/SA ID, and the like may be included. The AMF2 462 that has received a registration request from the UE2 432 may identify subscriber information through the UDM and store related subscription context at the AMF. Further, the AMF may transmit the related context to the gNB2 442, transmit a registration response to the UE2 432, and complete the remaining registration procedure. Subsequently, the UE2 432 may establish a PDU session associated with a DNN/S-NSSAI.

In step 401, the AF 490 may transmit a 5GS sync request for target UEs to a time sensitive communications and time synchronization function (TSCTSF)/network exposure function (NEF) 485. The request may include required synchronization accuracy as a sync error budget. Further, the request may specify coverage to which the sync service is to be applied. The target UEs may be indicated by a UE ID list, a group ID, or a data network name (DNN)/single network slice selection assistance information (S-NSSAI). Further, the request may include an RA adjust request. In this case, the TSCTSF/NEF may derive TA IDs satisfying the coverage condition and manage the derived TA IDs as a TA List. In this example, the target of the sync service is UEs having a DNN/S-NSSAI.

In step 402, the TSCTSF/NEF 485 may determine, from the UDM, the AMF with which each UE having a PDU session corresponding to a DNN/S-NSSAI combination is registered. In this step, the TSCTSF/NEF 485 may obtain location information of the AMF using the NRF. For example, the TSCTSF 485 may determine that UE1 is located in the AMF1 and the UE2 is located in the AMF2. In this step, the TSCTSF 485 may request notification when the AMF in which the UEs are located has changed. Thereafter, the TSCTSF 485 may request an area of interest for each UE to each AMF.

In step 403, the TSCTSF 485 may request the AMF1 461 to notify information on a location of the UE1 and whether the UE1 belongs to an AoI. In this case, the location of the UE may be converted and used based on a TA ID list known in 3GPP.

In step 404, the AMF1 461 may notify the TSCTSF/NEF 485 of the current location of the UE1, whether the location satisfies the coverage condition, and subscription status of the UE1.

In step 405, the TSCTSF/NEF 485 may report a current status of the sync request to the AF 490. In this case, the report may include the UE1, a sync error budget, a coverage condition, and the like.

In step 406, the AF may identify again whether the sync error budget or the coverage condition is satisfied using the report of step 405, and if necessary, transmit a modified sync service request to the TSCTSF/NEF 485.

In step 407, the AF 490 may transmit a modified sync service request to the TSCTSF/NEF 485. In this case, the modified sync service request may include the UE1, a sync error budget, and a coverage condition.

In step 408, the TSCTSF 485 may identify again whether the coverage condition is satisfied.

In step 409, the TSCTSF 485 may check again whether the requested sync error budget may be satisfied through the sync error budget of the RAN transferred via the AMF1 461.

In step 410, the TSCTSF/NEF 485 may notify the AF 490 of the current status of the sync request. In this case, the notification may include the UE1, a sync error budget, a location, a range, and the like.

In step 411, the TSCTSF 485 may apply a sync service to the UE1. In this case, a request from the TSCTSF may be transmitted to the AMF via the PCF. The AMF may apply the request to the gNB1 to which the UE1 belongs, thereby applying only a sync service using RAN technologies, such as SIB broadcasting and RRC signaling, between the gNB1 and the UE1. Alternatively, the TSCTSF may additionally apply a (g)PTP-based sync service by transmitting signals to an NW-TT and a DS-TT, such that sync messages are periodically transferred from an NW-TT of the UPF1 to a DS-TT of the UE1 simultaneously with the sync service using RAN technologies. This process is as described with reference to FIG. 1.

In step 403a, the TSCTSF 485 may request the AMF2 462 to notify information on a location of the UE2 432 and whether the UE2 432 belongs to an AoI. In this case, the location of the UE may be converted and used based on a TA ID list known in 3GPP.

In step 404a, the AMF2 462 may notify the TSCTSF/NEF 485 of the current location of the UE2, whether the location satisfies the coverage condition, and subscription status of the UE2.

In step 405a, the TSCTSF/NEF 485 may report a current status of the sync request to the AF 490. In this case, the report may include the UE2, a sync error budget, a coverage condition, and the like.

In step 406a, the AF may identify again whether the sync error budget or the coverage condition is satisfied using the report in step 405a, and if necessary, transmit a modified sync service request to the TSCTSF/NEF 485.

In step 407a, the AF 490 may transmit a modified sync service request to the TSCTSF/NEF 485. In this case, the modified sync service request may include the UE2, a sync error budget, and a coverage condition.

In step 408a, the TSCTSF 485 may identify again whether the coverage condition is satisfied.

In step 409a, the TSCTSF 485 may check again whether the requested sync error budget may be satisfied through the sync error budget of the RAN transferred via the AMF2 462.

In step 410a, the TSCTSF/NEF 485 may notify the AF 490 of the current status of the sync request. In this case, the notification may include the UE2, a sync error budget, a location, a range, and the like.

In step 411a, the TSCTSF 485 may apply a sync service to the UE2. In this case, a request from the TSCTSF may be transmitted to the AMF2 via the PCF. The AMF2 may apply the request to the gNB2 to which the UE2 belongs, thereby applying only a sync service using RAN technologies, such as SIB broadcasting and RRC signaling, between the gNB2 and the UE2. Alternatively, the TSCTSF may additionally apply a (g)PTP-based sync service by transmitting signals to an NW-TT and a DS-TT, such that sync messages are periodically transmitted from an NW-TT of the UPF2 to a DS-TT of the UE2 simultaneously with the sync service using RAN technologies. This process is as described with reference to FIG. 1.

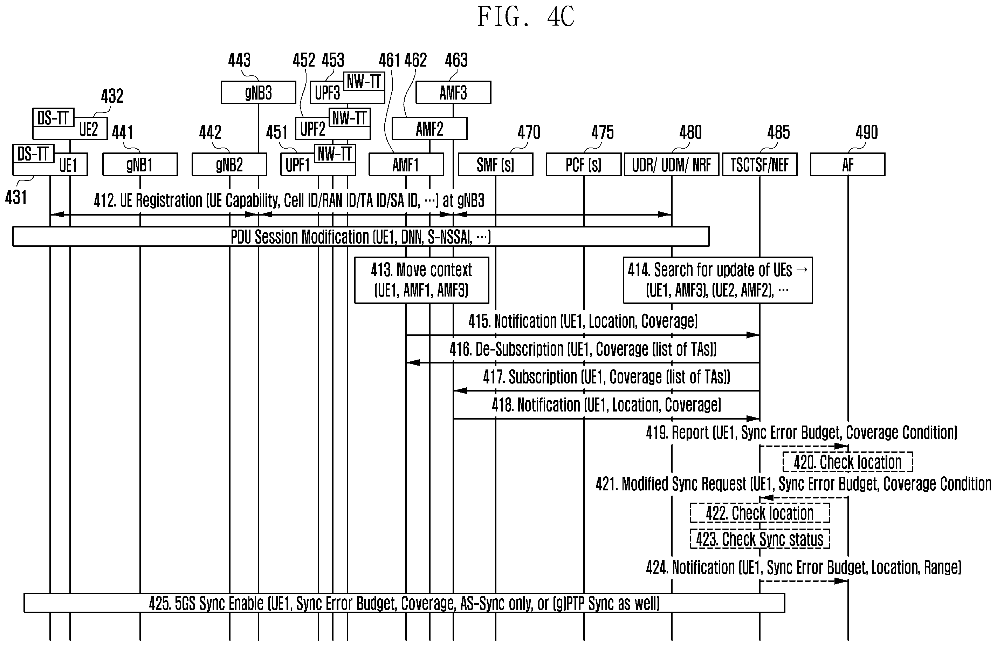

FIG. 4C is a signal flow diagram illustrating an operation of an area of interest subscription for a UE associated with a DNN/S-NSSAI targeted for a sync service when an inter-AMF handover occurs.

With reference to FIG. 4C, when the UE moves beyond an area of the AMF, subscription/de-subscription signaling for an area of interest subscription may occur simultaneously. In this case, as the number of UEs within a group identified by a group ID increases or the mobility of the UEs increases, a signaling load may increase, which may cause a problem.

In step 412, the UE1 431 may move from the gNB1 441 to a gNB3 443 and from an area of the AMF1 461 to an area of the AMF3 463, and perform registration with the AMF3 463. Because a change in the UPF and the SMF may occur, a PDU session modification for the UE1 associated with a DNN/S-NSSAI may also be performed.

In step 413, UE context information may be transferred between the AMF1 461 and the AMF3 463 according to a handover of the UE1.

In step 414, a UDM/UDR 480 may be updated according to an AMF change of the UE1 and notify the TSCTSF 485 of the update. That is, the UDM/UDR 480 may notify the TSCTSF 485 that a registration location of the UE1 431 has been changed from the AMF1 461 to the AMF3 463.

In step 415, the AMF1 461 may notify the TSCTSF 485 of a location change of the UE1. In this case, the notification may include the UE1 and coverage (a list of TAs).

In step 416, the TSCTSF 485 may unsubscribe from a location notification subscription for the UE1 with the AMF1 461. In this case, a de-subscription request may include the UE1, a location, and coverage.

In step 417, the TSCTSF 485 may request a location notification subscription for the UE1 to the AMF3 463. In this case, the subscription request may include the UE1, location, and coverage.

In step 418, the AMF3 463 may notify the TSCTSF/NEF 485 of the current location of the UE1, whether the location satisfies the coverage condition, and subscription status of the UE1.

In step 419, the TSCTSF/NEF 485 may report a current status of the sync request to the AF 490. In this case, the report may include the UE1, a sync error budget, a coverage condition, and the like.

In step 420, the AF 490 may identify again whether the sync error budget or the coverage condition is satisfied using the report of step 419, and if necessary, transmit a modified sync service request to the TSCTSF/NEF 485.

In step 421, the AF 490 may transmit a modified sync service request to the TSCTSF/NEF 485. In this case, the modified sync service request may include the UE1, a sync error budget, and a coverage condition.

In step 422, the TSCTSF 485 may identify again whether the coverage condition is satisfied.

In step 423, the TSCTSF 485 may check again whether the requested sync error budget may be satisfied through the sync error budget of the RAN transferred via the AMF1 461.

In step 424, the TSCTSF/NEF 485 may notify the AF 490 of the current status of the sync request. In this case, the notification may include the UE1, a sync error budget, a location, a range, and the like.

In step 425, the TSCTSF 485 may apply a sync service to the UE1. In this case, a request from the TSCTSF may be transmitted to the AMF via the PCF. The AMF may apply the request to the gNB1 to which the UE1 belongs, thereby applying only a sync service using RAN technologies, such as SIB broadcasting and RRC signaling, between the gNB1 and the UE1. Alternatively, the TSCTSF may additionally apply a (g)PTP-based sync service by transmitting signals to an NW-TT and a DS-TT, such that sync messages are periodically transferred from an NW-TT of the UPF1 to a DS-TT of the UE1 simultaneously with the sync service using RAN technologies. This process is as described with reference to FIG. 1.

In order to prevent AoI subscription/de-subscription signaling that occurs during a handover, during a sync request, AMFs may be discovered at once by referring to a coverage condition and conditions of a plurality of target UEs, and AoI subscription may be performed such that AoI subscription/de-subscription is not performed for the corresponding UEs during a handover within the coverage conditions. In performing the AoI subscription, an All-AMF indication may be additionally applied so as to prevent AoI subscription/de-subscription for the corresponding UEs during a handover within the coverage condition.

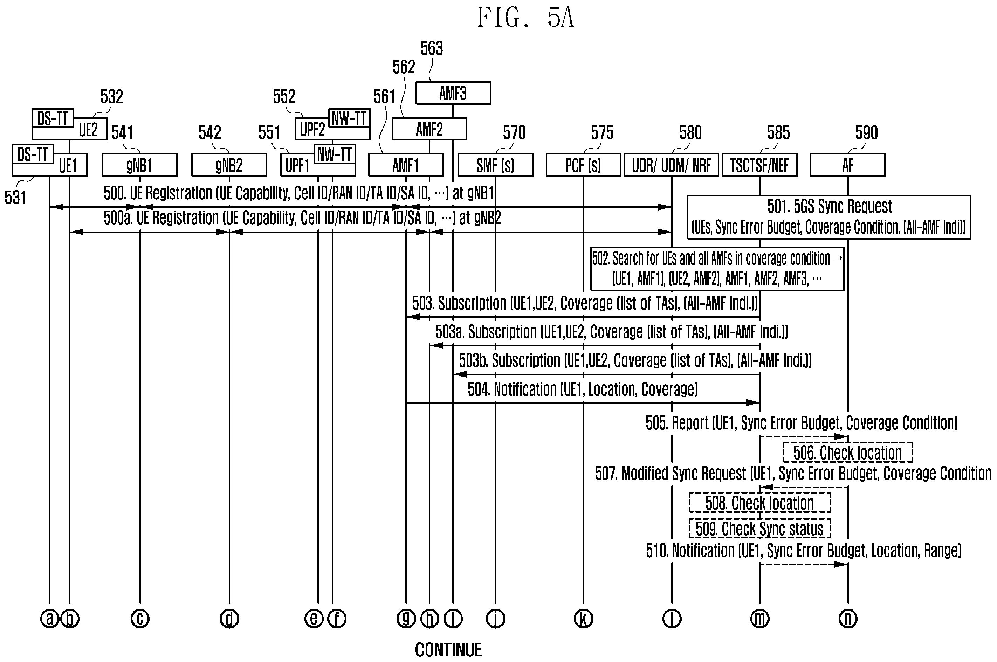

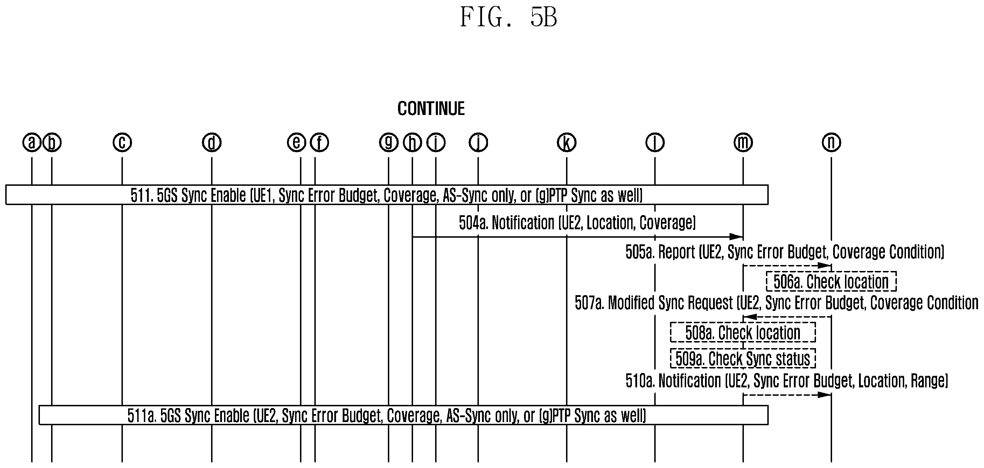

FIGS. 5A and 5B are signal flow diagrams illustrating an operation of an area of interest subscription for each UE in a list of UEs targeted for a sync service when an All-AMF indication is applied.

With reference to FIGS. 5A and 5B, AMFs may be discovered at once and AoI subscription may be performed, such that AoI subscription/de-subscription is not performed for the corresponding UEs during a handover within the coverage condition. In performing the AoI subscription, an All-AMF indication may be additionally applied so as to prevent AoI subscription/de-subscription for the corresponding UEs during a handover within the coverage condition.

In step 500, a UE1 531 may access a gNB1 541 and perform registration with an AMF1 561. In this case, a UE capability, a cell ID/RAN ID/TA ID/SA ID, and the like may be included. The AMF1 561 that has received a registration request from the UE1 531 may identify subscriber information through the UDM and store related subscription context at the AMF. Further, the AMF1 561 may transmit the related context to the gNB1 541, transmit a registration response to the UE1 531, and complete the remaining registration procedure.

In step 500a, a UE2 532 may access a gNB2 542 and perform registration with an AMF2 562. In this case, a UE capability, a cell ID/RAN ID/TA ID/SA ID, and the like may be included. The AMF2 562 that has received a registration request from the UE2 532 may identify subscriber information through the UDM and store related subscription context at the AMF. Further, the AMF may transmit the related context to the gNB2 542, transmit a registration response to the UE2 532, and complete the remaining registration procedure.

In step 501, an AF 590 may transmit a 5GS sync request for target UEs to a time sensitive communications and time synchronization Function (TSCTSF)/network exposure function (NEF) 585. The request may include required synchronization accuracy as a sync error budget. Further, the request may specify coverage to which the sync service is to be applied. The target UEs may be indicated by a UE ID list, a group ID, or a data network name (DNN)/single network slice selection assistance information (S-NSSAI). Further, the request may include an RA adjust request. In this case, the TSCTSF/NEF may derive TA IDs satisfying the coverage condition and manage the derived TA IDs as a TA List. In this example, the target of the sync service is provided as a UE list. In order to discover AMFs at once and perform AoI subscription such that AoI subscription/de-subscription is not performed for the corresponding UEs during a handover within the coverage condition, the AF may include an All-AMF indication in the sync request. The All-AMF indication may be implicitly applied without being included. For example, when the number of UEs in the UE list exceeds a predetermined criterion, the All-AMF indication may be explicitly applied. In another example, when specific UEs are included in the UE list, the All-AMF indication may be explicitly replaced. Alternatively, the All-AMF indication may be explicitly replaced according to a UE type.

In step 502, the TSCTSF/NEF 585 may discover all AMFs satisfying the coverage condition through the UDM and determine the AMF with which each target UE is registered. In this step, the TSCTSF/NEF 585 may obtain location information of the AMF using the NRF. For example, the TSCTSF 585 may determine that AMFs satisfying the coverage condition include an AMF1, an AMF2, and an AMF3, and that the UE1 is located in the AMF1 and the UE2 is located in the AMF2. In this step, the TSCTSF 585 may request notification when the AMF in which the UEs are located has changed. Thereafter, the TSCTSF 585 may request an area of interest for each UE to each AMF.

In step 503, the TSCTSF 585 may request the AMF1 561 to notify location information of a UE list including an UE1 and an UE2 and information on whether the UE1 and the UE2 belong to an AoI. In this case, the location of each UE may be converted and used based on a TA ID list known in 3GPP. In this step, an All-AMF indication may be included. The All-AMF indication may be implicitly applied without being included. For example, when the number of UEs in the UE list exceeds a predetermined criterion, the All-AMF indication may be implicitly applied. In another example, when specific UEs are included in the UE list, the All-AMF indication may be implicitly applied. Alternatively, the All-AMF indication may be implicitly applied according to a UE type.

In step 503a, the TSCTSF 585 may request the AMF2 562 to notify location information of a UE list including a UE1 and a UE2 and information on whether the UE1 and the UE2 belong to an AoI. In this case, the location of each UE may be converted and used based on a TA ID list known in 3GPP. In this step, an All-AMF indication may be included. The All-AMF indication may be implicitly applied without being included. For example, when the number of UEs in the UE list exceeds a predetermined criterion, the All-AMF indication may be implicitly applied. In another example, when specific UEs are included in the UE list, the All-AMF indication may be implicitly applied. Alternatively, the All-AMF indication may be implicitly applied according to a UE type.

In step 503b, the TSCTSF 585 may request an AMF3 563 to notify location information of a UE list including a UE1 and a UE2 and information on whether the UE1 and the UE2 belong to an AoI. In this case, the location of the UE may be converted and used based on a TA ID list known in 3GPP. In this step, an All-AMF indication may be included. The All-AMF indication may be implicitly applied without being included. For example, when the number of UEs in the UE list exceeds a predetermined criterion, the All-AMF indication may be implicitly applied. In another example, when specific UEs are included in the UE list, the All-AMF indication may be implicitly applied. Alternatively, the All-AMF indication may be implicitly applied according to a UE type.

In step 504, the AMF1 561 may notify the TSCTSF/NEF 585 of the current location of the UE1, whether the location satisfies the coverage condition, and subscription status of the UE1.

In step 505, the TSCTSF/NEF 585 may report a current status of the sync request to the AF 590. In this case, the report may include the UE1, a sync error budget, a coverage condition, and the like.

In step 506, the AF 590 may identify again whether the sync error budget or the coverage condition is satisfied using the report of step 505, and if necessary, transmit a modified sync service request to the TSCTSF/NEF 585.

In step 507, the AF 590 may transmit a modified sync service request to the TSCTSF/NEF 585. In this case, the modified sync service request may include the UE1, a sync error budget, and a coverage condition.

In step 508, the TSCTSF 585 may identify again whether the coverage condition is satisfied.

In step 509, the TSCTSF 585 may check again whether the requested sync error budget may be satisfied through the sync error budget of the RAN transferred via the AMF1 561.

In step 510, the TSCTSF/NEF 585 may notify the AF 590 of the current status of the sync request. In this case, the notification may include the UE1, a sync error budget, a location, a range, and the like.

In step 511, the TSCTSF 585 may apply a sync service to the UE1. In this case, a request from the TSCTSF may be transmitted to the AMF via the PCF. The AMF may apply the request to the gNB1 to which the UE1 belongs, thereby applying only a sync service using RAN technologies, such as SIB broadcasting and RRC signaling, between the gNB1 and the UE1. Alternatively, the TSCTSF may additionally apply a (g)PTP-based sync service by transmitting signals to an NW-TT and a DS-TT, such that sync messages are periodically transferred from an NW-TT of the UPF1 to a DS-TT of the UE1 simultaneously with the sync service using RAN technologies. This process is as described with reference to FIG. 1.

In step 504a, an AMF2 562 may notify the TSCTSF/NEF 585 of the current location of the UE2, whether the location satisfies the coverage condition, and subscription status of the UE2.

In step 505a, the TSCTSF/NEF 585 may report a current status of the sync request to the AF 590. In this case, the report may include the UE2, a sync error budget, a coverage condition, and the like.

In step 506a, the AF 590 may identify again whether the sync error budget or the coverage condition is satisfied using the report of step 505a, and if necessary, transmit a modified sync service request to the TSCTSF/NEF.

In step 507a, the AF 590 may transmit a modified sync service request to the TSCTSF/NEF 585. In this case, the modified sync service request may include the UE2, a sync error budget, and a coverage condition.

In step 508a, the TSCTSF 585 may identify again whether the coverage condition is satisfied.

In step 509a, the TSCTSF 585 may check again whether the requested sync error budget may be satisfied through the sync error budget of the RAN transferred via the AMF2 562.

In step 510a, the TSCTSF/NEF 585 may notify the AF 590 of the current status of the sync request. In this case, the notification may include the UE2, a sync error budget, a location, a range, and the like.

In step 511a, the TSCTSF 585 may apply a sync service to the UE2. In this case, a request from the TSCTSF may be transmitted to the AMF2 via the PCF. The AMF2 may apply the request to the gNB2 to which the UE2 belongs, thereby applying only a sync service using RAN technologies, such as SIB broadcasting and RRC signaling, between the gNB2 and the UE2. Alternatively, the TSCTSF may additionally apply a (g)PTP-based sync service by transmitting signals to an NW-TT and a DS-TT, such that sync messages are periodically transferred from an NW-TT of the UPF2 to a DS-TT of the UE2 simultaneously with the sync service using RAN technologies. This process is as described with reference to FIG. 1.

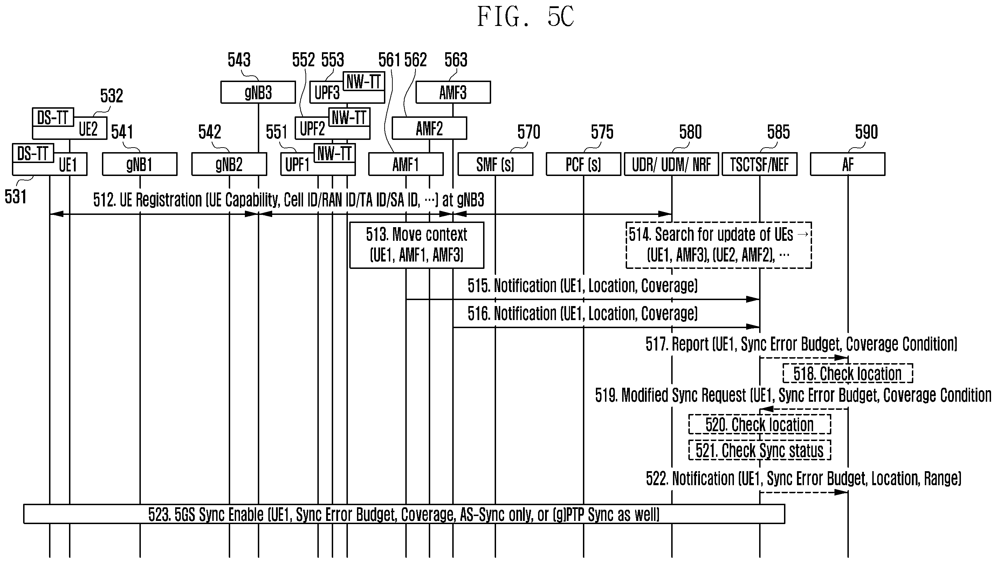

FIG. 5C is a signal flow diagram illustrating an operation of an area of interest subscription for each UE in a list of UEs targeted for a sync service when an All-AMF indication is applied and an inter-AMF handover occurs.

With reference to FIG. 5C, when the UE moves beyond an area of the AMF, subscription/de-subscription signaling for an area of interest subscription may occur simultaneously. In this case, as the number of target UEs increases or the mobility of the UEs increases, a signaling load may also increase, which may cause a problem. Through the process of FIG. 5A, when a sync service has a coverage condition and targets UEs specified by a UE list, the 5GS may discover AMFs at once and perform AoI subscription, such that AoI subscription/de-subscription is not performed for the corresponding UEs during a handover within the coverage condition. In performing the AoI subscription, an All-AMF indication may be additionally applied so as to prevent AoI subscription/de-subscription for the corresponding UEs during a handover within the coverage condition.

In step 512, the UE1 531 may move from the gNB1 541 to a gNB3 543 and from an area of the AMF1 561 to an area of the AMF3 563, and perform registration with the AMF3 543.

In step 513, UE context information may be transferred between the AMF1 561 and the AMF3 563 according to a handover of the UE1.

In step 514, a UDM/UDR 580 may be updated according to an AMF change of the UE1 and notify the TSCTSF 585 of the update. That is, the UDM/UDR 580 may notify the TSCTSF 585 that a registration location of the UE1 531 has been changed from the AMF1 561 to the AMF3 563.

In step 515, the AMF1 561 may notify the TSCTSF 585 of a location change of the UE1. In this case, the notification may include the UE1 and coverage (a list of TAs). In this case, unlike FIG. 2B, the TSCTSF does not unsubscribe from a location notification subscription for the UE1 with the AMF1.

In step 516, the AMF3 563 may notify the TSCTSF/NEF 585 of the current location of the UE1, whether the location satisfies the coverage condition, and subscription status of the UE1. In this case, unlike FIG. 2B, no signaling is performed for the TSCTSF to request a location notification subscription for the UE1 from the AMF3.

In step 517, the TSCTSF/NEF 585 may report a current status of the sync request to the AF 590. In this case, the report may include the UE1, a sync error budget, a coverage condition, and the like.

In step 518, the AF 590 may identify again whether the sync error budget or the coverage condition is satisfied using the report of step 517, and if necessary, transmit a modified sync service request to the TSCTSF/NEF 585.

In step 519, the AF 590 may transmit a modified sync service request to the TSCTSF/NEF 585. In this case, the modified sync service request may include the UE1, a sync error budget, and a coverage condition.

In step 520, the TSCTSF 585 may identify again whether the coverage condition is satisfied.

In step 521, the TSCTSF 585 may check again whether the requested sync error budget may be satisfied through the sync error budget of the RAN transferred via the AMF1 561.

In step 522, the TSCTSF/NEF 585 may notify the AF 590 of the current status of the sync request. In this case, the notification may include the UE1, a sync error budget, a location, a range, and the like.

In step 523, the TSCTSF 585 may apply a sync service to the UE1. In this case, a request from the TSCTSF may be transmitted to the AMF via the PCF. The AMF may apply the request to the gNB1 to which the UE1 belongs, thereby applying only a sync service using RAN technologies, such as SIB broadcasting and RRC signaling, between the gNB1 and the UE1. Alternatively, the TSCTSF may additionally apply a (g)PTP-based sync service by transmitting signals to an NW-TT and a DS-TT, such that sync messages are periodically transferred from an NW-TT of the UPF1 to a DS-TT of the UE1 simultaneously with the sync service using RAN technologies. This process is as described with reference to FIG. 1.

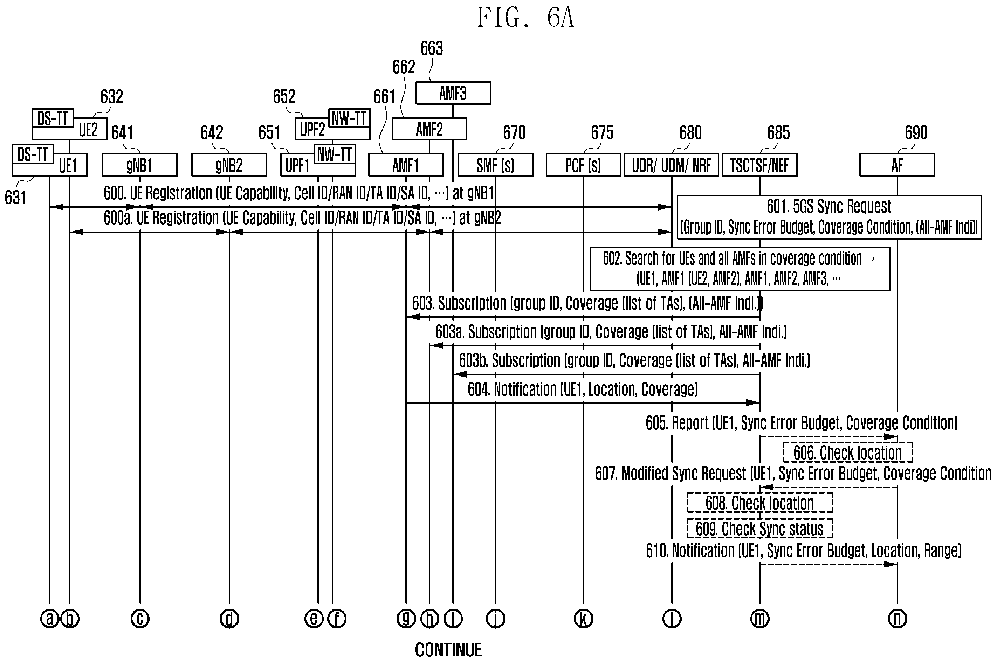

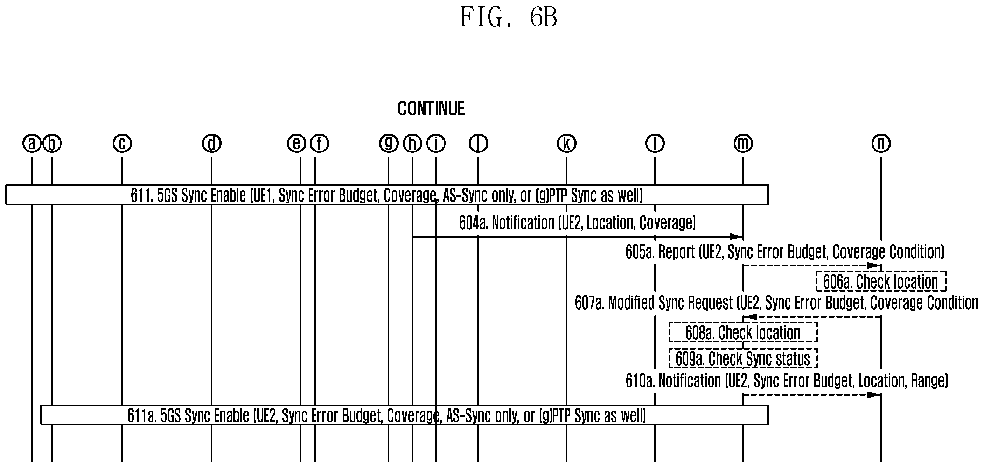

FIGS. 6A and 6B are signal flow diagrams illustrating an operation of an area of interest subscription for each UE in a group targeted for a sync service when an All-AMF indication is applied.

With reference to FIGS. 6A and 6B, when a sync service has a coverage condition and targets a list of UEs identified by an internal group identifier, the 5GS may discover AMFs at once and perform AoI subscription, such that AoI subscription/de-subscription is not performed for the corresponding UEs during a handover within the coverage condition. In performing the AoI subscription, an All-AMF indication may be additionally applied so as to prevent AoI subscription/de-subscription for the corresponding UEs during a handover within the coverage condition.

In step 600, a UE1 631 may access a gNB1 641 and perform registration with an AMF1 661. In this case, a UE capability, a cell ID/RAN ID/TA ID/SA ID, and the like may be included. The AMF1 661 that has received a registration request from the UE1 631 may identify subscriber information through the UDM and store related subscription context at the AMF. Further, the AMF1 661 may transmit the related context to the gNB1 641, transmit a registration response to the UE1 631, and complete the remaining registration procedure.

In step 600a, a UE2 632 may access a gNB2 642 and perform registration with an AMF2 662. In this case, a UE capability, a cell ID/RAN ID/TA ID/SA ID, and the like may be included. The AMF2 662 that has received the registration request from the UE2 632 may identify subscriber information through the UDM and store related subscription context at the AMF. Further, the AMF may transmit the related context to the gNB2 642, transmit a registration response to the UE2 632, and complete the remaining registration procedure.

In step 601, an AF 690 may transmit a 5GS sync request for target UEs to a time sensitive communications and time synchronization function (TSCTSF)/network exposure function (NEF) 685. The request may include required synchronization accuracy as a sync error budget. Further, the request may specify coverage to which the sync service is to be applied. The target UEs may be indicated by a UE ID list, a group ID, or a data network name (DNN)/single network slice selection assistance information (S-NSSAI). Further, the request may include a RA adjust request. In this case, the TSCTSF/NEF may derive TA IDs satisfying the coverage condition and manage the derived TA IDs as a TA list. In this example, the target of the sync service is provided as a group ID. The group ID provided by the AF may be an external group ID usable outside the 5GS, and the NEF or the TSCTSF may convert the external group ID into an internal group ID, or the external group ID may be converted into the internal group ID by the UDM. In order to discover AMFs at once and perform AoI subscription such that AoI subscription/de-subscription is not performed for the corresponding UEs during a handover within the coverage condition, the AF may include an All-AMF indication in the sync request. The All-AMF indication may be implicitly applied without being included. For example, when the number of UEs in a UE list exceeds a predetermined criterion, the All-AMF indication may be implicitly applied. In another example, when specific UEs are included in the UE list, the All-AMF indication may be implicitly applied. Alternatively, the All-AMF indication may be implicitly applied according to a UE type. In another example, when a specific group ID is used, the All-AMF indication may be implicitly applied. Alternatively, when a plurality of UEs are designated by a group ID, the All-AMF indication may be implicitly applied.

In step 602, the TSCTSF/NEF 685 may discover all AMFs satisfying the coverage condition through the UDM and determine the AMF with which each UE of a group identified by a group ID is registered. In this step, the TSCTSF/NEF 685 may obtain location information of the AMF using the NRF. For example, the TSCTSF 685 may determine that AMFs satisfying the coverage condition include an AMF1, an AMF2, and an AMF3, and that the UE1 is located in the AMF1 and the UE2 is located in the AMF2. In this step, the TSCTSF 685 may request notification when the AMF in which the UEs are located has changed. Thereafter, the TSCTSF 685 may request an area of interest for each UE to each AMF.

In step 603, the TSCTSF 685 may request the AMF1 661 to notify location information of UEs of a group identified by a group ID (Internal group ID) and information on whether the UEs belong to an AoI. In this case, the location of the UE may be converted and used based on a TA ID list known in 3GPP. In this step, an All-AMF indication may be included. The All-AMF indication may be implicitly applied without being included. For example, when the number of UEs in the UE list exceeds a predetermined criterion, the All-AMF indication may be implicitly applied. In another example, when specific UEs are included in the UE list, the All-AMF indication may be implicitly applied. Alternatively, the All-AMF indication may be implicitly applied according to a UE type.

In step 603a, the TSCTSF 685 may request the AMF2 662 to notify location information of UEs in a group identified by a group ID (Internal group ID) and information on whether the UEs belong to an AoI. In this case, the location of the UE may be converted and used based on a TA ID list known in 3GPP. In this step, an All-AMF indication may be included. The All-AMF indication may be implicitly applied without being included. For example, when the number of UEs in the UE list exceeds a predetermined criterion, the All-AMF indication may be implicitly applied. In another example, when specific UEs are included in the UE list, the All-AMF indication may be implicitly applied. Alternatively, the All-AMF indication may be implicitly applied according to a UE type.

In step 603b, the TSCTSF 685 may request an AMF3 663 to notify location information of UEs of a group identified by a group ID (Internal group ID) and information on whether the UEs belong to an AoI. In this case, the location of the UE may be converted and used based on a TA ID list known in 3GPP. In this step, an All-AMF indication may be included. The All-AMF indication may be implicitly applied without being included. For example, when the number of UEs in the UE list exceeds a predetermined criterion, the All-AMF indication may be implicitly applied. In another example, when specific UEs are included in the UE list, the All-AMF indication may be implicitly replaced. Alternatively, the All-AMF indication may be implicitly replaced according to a UE type.

In step 604, the AMF1 661 may notify the TSCTSF/NEF 685 of the current location of the UE1, whether the location satisfies the coverage condition, and subscription status of the UE1.

In step 605, the TSCTSF/NEF 685 may report a current status of the sync request to the AF 690. In this case, the report may include the UE1, a sync error budget, a coverage condition, and the like.

In step 606, the AF 690 may identify again whether the sync error budget or the coverage condition is satisfied using the report of step 605, and if necessary, transmit a modified sync service request to the TSCTSF/NEF 685.

In step 607, the AF 690 may transmit a modified sync service request to the TSCTSF/NEF 685. In this case, the modified sync service request may include the UE1, a sync error budget, and a coverage condition.

In step 608, the TSCTSF 685 may identify again whether the coverage condition is satisfied.

In step 609, the TSCTSF 685 may check again whether the requested sync error budget may be satisfied through the sync error budget of the RAN transferred via the AMF1 661.

In step 610, the TSCTSF/NEF 685 may notify the AF 690 of the current status of the sync request. In this case, the notification may include the UE1, a sync error budget, a location, a range, and the like.

In step 611, the TSCTSF 685 may apply a sync service to the UE1. In this case, a request from the TSCTSF may be transmitted to the AMF via the PCF. The AMF may apply the request to the gNB1 to which the UE1 belongs, thereby applying only a sync service using RAN technologies, such as SIB broadcasting and RRC signaling, between the gNB1 and the UE1. Alternatively, the TSCTSF may additionally apply a (g)PTP-based sync service by transmitting signals to an NW-TT and a DS-TT, such that sync messages are periodically transferred from an NW-TT of the UPF1 to a DS-TT of the UE1 simultaneously with the sync service using RAN technologies. This process is as described with reference to FIG. 1.

In step 604a, the AMF2 662 may notify the TSCTSF/NEF 685 of the current location of the UE2, whether the location satisfies the coverage condition, and subscription status of the UE2.

In step 605a, the TSCTSF/NEF 685 may report a current status of the sync request to the AF 690. In this case, the report may include the UE2, a sync error budget, a coverage condition, and the like.

In step 606a, the AF 690 may identify again whether the sync error budget or the coverage condition is satisfied using the report of step 605a, and if necessary, transmit a modified sync service request to the TSCTSF/NEF.

In step 607a, the AF 690 may transmit a modified sync service request to the TSCTSF/NEF 685. In this case, the modified sync service request may include the UE2, a sync error budget, and a coverage condition.

In step 608a, the TSCTSF 685 may identify again whether the coverage condition is satisfied.

In step 609a, the TSCTSF 685 may check again whether the requested sync error budget may be satisfied through the sync error budget of the RAN transferred via the AMF2 662.

In step 610a, the TSCTSF/NEF 685 may notify the AF 690 of the current status of the sync request. In this case, the notification may include the UE2, a sync error budget, a location, a range, and the like.

In step 611a, the TSCTSF 685 may apply a sync service to the UE2. In this case, a request from the TSCTSF may be transmitted to the AMF2 via the PCF. The AMF2 may apply the request to the gNB2 to which the UE2 belongs, thereby applying only a sync service using RAN technologies, such as SIB broadcasting and RRC signaling, between the gNB2 and the UE2. Alternatively, the TSCTSF may additionally apply a (g)PTP-based sync service by transmitting signals to an NW-TT and a DS-TT, such that sync messages are periodically transferred from an NW-TT of the UPF2 to a DS-TT of the UE2 simultaneously with the sync service using RAN technologies. This process is as described with reference to FIG. 1.

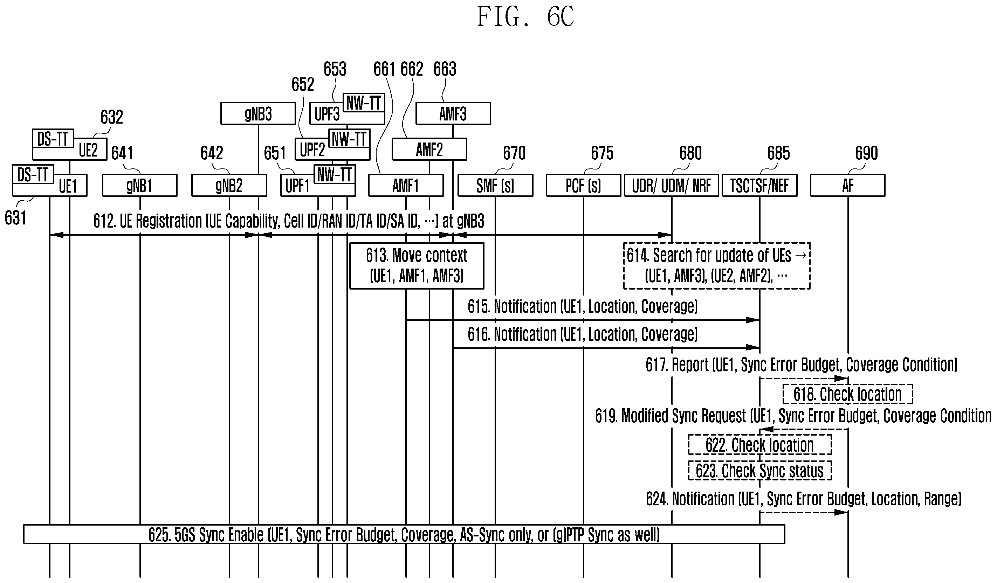

FIG. 6C is a signal flow diagram illustrating an operation of an area of interest subscription for each UE in a group targeted for a sync service when an All-AMF indication is applied and an inter-AMF handover occurs.

With reference to FIG. 6C, when the UE moves beyond an area of the AMF, subscription/de-subscription signaling of an area of interest subscription may occur simultaneously. In this case, as the number of UEs in a group identified by a group ID increases or the mobility of the UEs increases, a signaling load may also increase, which may cause a problem. Through the process of FIG. 6A, when a sync service has a coverage condition and targets UEs in a group identified by a group ID, the 5GS may discover AMFs at once and perform AoI subscription, such that AoI subscription/de-subscription is not performed for the corresponding UEs during a handover within the coverage condition. In performing the AoI subscription, an All-AMF indication may be additionally applied so as to prevent AoI subscription/de-subscription for the corresponding UEs during a handover within the coverage condition.

In step 612, the UE1 631 may move from the gNB1 641 to a gNB3 643 and from an area of the AMF1 661 to an area of the AMF3 663, and perform registration with the AMF3 663.

In step 613, UE context information may be transferred between the AMF1 661 and the AMF3 663 according to a handover of the UE1.

In step 614, a UDM/UDR 680 may be updated according to an AMF change of the UE1 and notify the TSCTSF 685 of the update. That is, the UDM/UDR 680 may notify the TSCTSF 685 that a registration location of the UE1 631 has been changed from the AMF1 661 to the AMF3 663.

In step 615, the AMF1 661 may notify the TSCTSF 685 of a location change of the UE1. In this case, the notification may include the UE1 and coverage (a list of TAs). In this case, unlike FIG. 2B, the TSCTSF does not unsubscribe from a location notification subscription for the UE1 with the AMF1.

In step 616, the AMF3 663 may notify the TSCTSF/NEF 685 of the current location of the UE1, whether the location satisfies the coverage condition, and subscription status of the UE1. In this case, unlike FIG. 2B, no signaling is performed for the TSCTSF to request a location notification subscription for the UE1 from the AMF3.

In step 617, the TSCTSF/NEF 685 may report a current status of the sync request to the AF 690. In this case, the report may include the UE1, a sync error budget, a coverage condition, and the like.

In step 618, the AF 690 may identify again whether the sync error budget or the coverage condition is satisfied using the report of step 617, and if necessary, transmit a modified sync service request to the TSCTSF/NEF 685.

In step 619, the AF 690 may transmit a modified sync service request to the TSCTSF/NEF 685. In this case, the modified sync service request may include the UE1, a sync error budget, and a coverage condition.

In step 620, the TSCTSF 685 may identify again whether the coverage condition is satisfied.

In step 621, the TSCTSF 685 may check again whether the requested sync error budget may be satisfied through the sync error budget of the RAN transferred via the AMF1 661.

In step 622, the TSCTSF/NEF 685 may notify the AF 690 of the current status of the sync request. In this case, the notification may include the UE1, a sync error budget, a location, a range, and the like.

In step 623, the TSCTSF 685 may apply a sync service to UE1. In this case, a request from the TSCTSF may be transmitted to the AMF via the PCF. The AMF may apply the request to the gNB1 to which UE1 belongs, thereby applying only a sync service using RAN technologies, such as SIB broadcasting and RRC signaling, between the gNB1 and the UE1. Alternatively, the TSCTSF may additionally apply a (g)PTP-based sync service by transmitting signals to an NW-TT and a DS-TT, such that sync messages are periodically transferred from an NW-TT of the UPF1 to a DS-TT of the UE1 simultaneously with the sync service using RAN technologies. This process is as described with reference to FIG. 1.

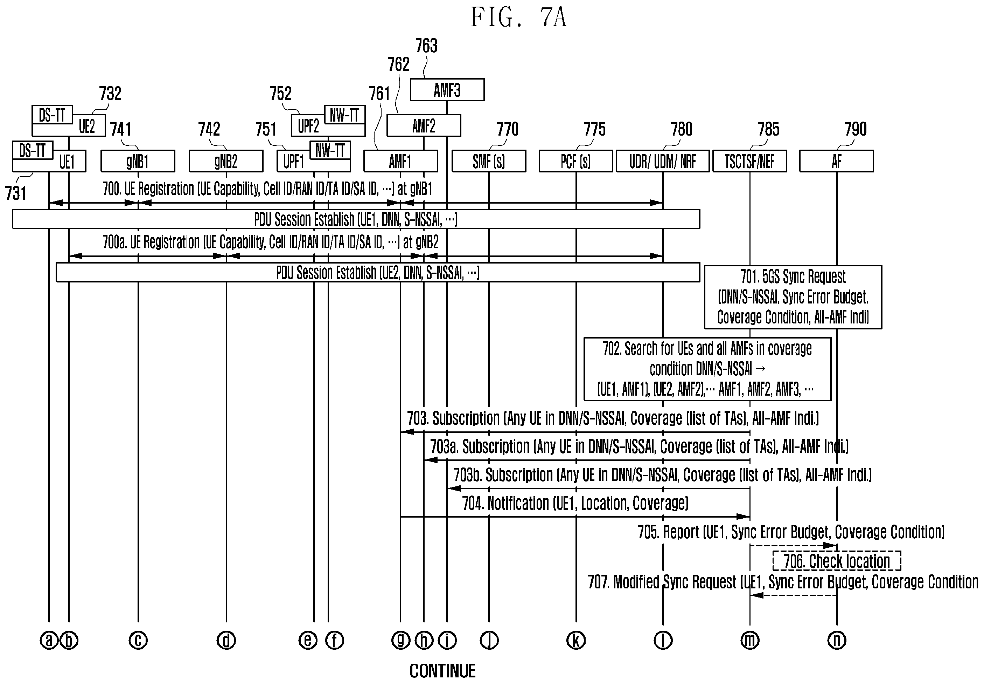

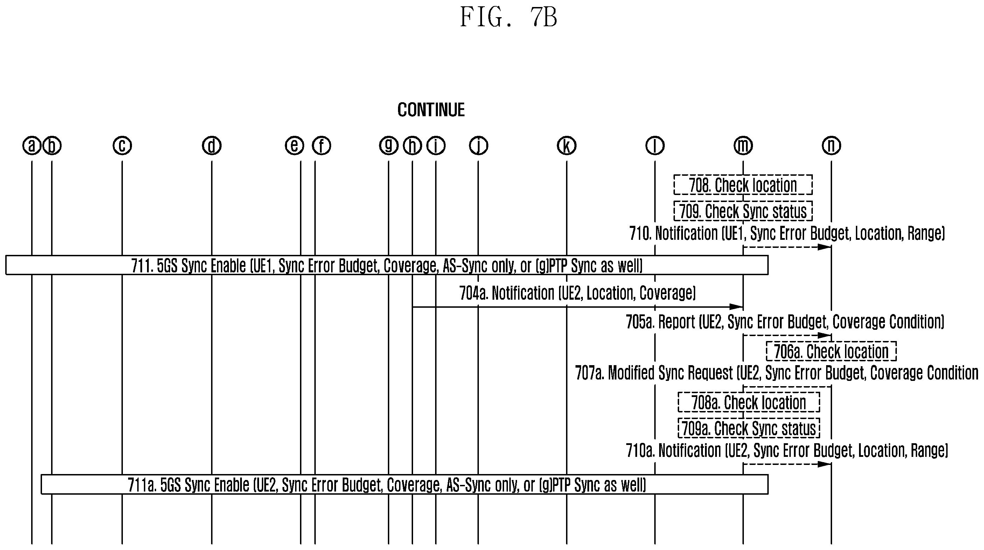

FIGS. 7A and 7B are signal flow diagrams illustrating an operation of an area of interest subscription for each UE associated with a DNN/S-NSSAI targeted for a sync service when an All-AMF indication is applied.

With reference to FIGS. 7A and 7B, when a sync service has a coverage condition and targets UEs having a DNN/S-NSSAI, the 5GS may request an area of interest for each UE to the AMF. When the sync service has a coverage condition and targets UEs having PDU sessions associated with a DNN/S-NSSAI combination, the 5GS may discover AMFs at once and perform AoI subscription, such that AoI subscription/de-subscription is not performed for the corresponding UEs during a handover within the coverage condition. In performing the AoI subscription, an All-AMF indication may be additionally applied so as to prevent AoI subscription/de-subscription for the corresponding UEs during a handover within the coverage condition.

In step 700, a UE1 731 may access a gNB1 741 and perform registration with an AMF1 761. In this case, a UE capability, a cell ID/RAN ID/TA ID/SA ID, and the like may be included. The AMF1 761 that has received a registration request from the UE1 731 may identify subscriber information through the UDM and store related subscription context at the AMF. Further, the AMF may transmit the related context to the gNB1 741, transmit a registration response to the UE1 731, and complete the remaining registration procedure. Subsequently, the UE1 731 may establish a PDU session associated with a DNN/S-NSSAI.

In step 700a, a UE2 732 may access a gNB2 742 and perform registration with an AMF2 762. In this case, a UE capability, a cell ID/RAN ID/TA ID/SA ID, and the like may be included. The AMF2 762 that has received a registration request from the UE2 732 may identify subscriber information through the UDM and store related subscription context at the AMF. Further, the AMF2 762 may transmit the related context to the gNB2 742, transmit a registration response to the UE2 732, and complete the remaining registration procedure. Subsequently, the UE2 732 may establish a PDU session associated with a DNN/S-NSSAI.

In step 701, an AF 790 may transmit a 5GS sync request for target UEs to a time sensitive communications and time synchronization function (TSCTSF)/network exposure function (NEF) 785. The request may include required synchronization accuracy as a sync error budget. Further, the request may specify coverage to which the sync service is to be applied. The target UEs may be indicated by a UE ID list, a group ID, or a data network name (DNN)/single network slice selection assistance information (S-NSSAI). Further, the request may include a RA adjust request. In this case, the TSCTSF/NEF may derive TA IDs satisfying the coverage condition and manage the derived TA IDs as a TA list. In this example, the target of the sync service is UEs having a DNN/S-NSSAI. In order to discover AMFs at once and perform AoI subscription such that AoI subscription/de-subscription is not performed for the corresponding UEs during a handover within the coverage condition, the AF may include an All-AMF indication in the sync request. The All-AMF indication may be implicitly applied without being included. For example, when all UEs having a PDU session of a DNN/S-NSSAI are targeted, the All-AMF indication may be implicitly applied.

In step 702, the TSCTSF/NEF 785 may discover all AMFs satisfying a coverage condition through the UDM and determine the AMF with which each UE having a PDU session corresponding to a DNN/S-NSSAI combination is registered. In this step, the TSCTSF/NEF 785 may obtain location information of the AMF using the NRF. For example, the TSCTSF 785 may determine that an AMF1, an AMF2, and an AMF3 satisfy the coverage condition and that the UE1 is located in the AMF1 and the UE2 is located in the AMF2. In this step, the TSCTSF 785 may request notification when the AMF in which the UEs are located has changed. Thereafter, the TSCTSF 785 may request an area of interest for each UE to each AMF.

In step 703, the TSCTSF 785 may request the AMF1 761 to notify location information of UEs having a PDU session corresponding to a DNN/S-NSSAI combination and information on whether the UEs belong to an AoI. In this case, the location of the UE may be converted and used based on a TA ID list known in 3GPP. In this step, an All-AMF indication may be included. The All-AMF indication may be implicitly applied without being included. For example, when all UEs having a PDU session of a DNN/S-NSSAI are targeted, the All-AMF indication may be implicitly applied.

In step 703a, the TSCTSF 785 may request the AMF2 762 to notify location information of UEs having a PDU session corresponding to a DNN/S-NSSAI combination and information on whether the UEs belong to an AoI. In this case, the location of the UE may be converted and used based on a TA ID list known in 3GPP. In this step, an All-AMF indication may be included. The All-AMF indication may be implicitly replaced without being included. For example, when all UEs having a PDU session of the DNN/S-NSSAI are targeted, the All-AMF indication may be implicitly replaced.

In step 703b, the TSCTSF 785 may request an AMF3 763 to notify location information of UEs having a PDU session corresponding to a DNN/S-NSSAI combination and information on whether the UEs belong to an AoI. In this case, the location of the UE may be converted and used based on a TA ID list known in 3GPP. In this step, an All-AMF indication may be included. The All-AMF indication may be implicitly applied without being included. For example, when all UEs having a PDU session of the DNN/S-NSSAI are targeted, the All-AMF indication may be implicitly applied.

In step 704, the AMF1 761 may notify the TSCTSF/NEF 785 of the current location of the UE1, whether the location satisfies the coverage condition, and subscription status of the UE1.

In step 705, the TSCTSF/NEF 785 may report a current status of the sync request to the AF 790. In this case, the report may include the UE1, a sync error budget, a coverage condition, and the like.

In step 706, the AF 790 may identify again whether the sync error budget or the coverage condition is satisfied using the report of step 705, and if necessary, transmit a modified sync service request to the TSCTSF/NEF 785.

In step 707, the AF 790 may transmit a modified sync service request to the TSCTSF/NEF 785. In this case, the modified sync service request may include the UE1, a sync error budget, and a coverage condition.

In step 708, the TSCTSF 785 may identify again whether the coverage condition is satisfied.

In step 709, the TSCTSF 785 may check again whether the requested sync error budget may be satisfied through the sync error budget of the RAN transferred via the AMF1 761.

In step 710, the TSCTSF/NEF 785 may notify the AF 790 of the current status of the sync request. In this case, the notification may include the UE1, a sync error budget, a location, a range, and the like.

In step 711, the TSCTSF 785 may apply a sync service to the UE1. In this case, a request from the TSCTSF may be transmitted to the AMF via the PCF. The AMF may apply the request to the gNB1 to which the UE1 belongs, thereby applying only a sync service using RAN technologies, such as SIB broadcasting and RRC signaling, between the gNB1 and the UE1. Alternatively, the TSCTSF may additionally apply a (g)PTP-based sync service by transmitting signals to an NW-TT and a DS-TT, such that sync messages are periodically transferred from an NW-TT of the UPF1 to a DS-TT of the UE1 simultaneously with the sync service using RAN technologies. This process is as described with reference to FIG. 1.

In step 703a, the TSCTSF 785 may request the AMF2 762 to notify information on a location of the UE2 and whether the UE2 belongs to an AoI. In this case, the location of the UE may be converted and used based on a TA ID list known in 3GPP.

In step 704a, the AMF2 762 may notify the TSCTSF/NEF 785 of the current location of the UE2, whether the location satisfies the coverage condition, and subscription status of the UE2.

In step 705a, the TSCTSF/NEF 785 may report a current status of the sync request to the AF 790. In this case, the report may include the UE2, a sync error budget, a coverage condition, and the like.

In step 706a, the AF 790 may identify again whether the sync error budget or the coverage condition is satisfied using the report of step 705a, and if necessary, transmit a modified sync service request to the TSCTSF/NEF 785.

In step 707a, the AF 790 may transmit a modified sync service request to the TSCTSF/NEF 785. In this case, the modified sync service request may include the UE2, a sync error budget, and a coverage condition.

In step 708a, the TSCTSF 785 may identify again whether the coverage condition is satisfied.

In step 709a, the TSCTSF 785 may check again whether the requested sync error budget may be satisfied through the sync error budget of the RAN transferred via the AMF2 762.

In step 710a, the TSCTSF/NEF 785 may notify the AF 790 of the current status of the sync request. In this case, the notification may include the UE2, a sync error budget, a location, a range, and the like.

In step 711a, the TSCTSF 785 may apply a sync service to the UE2. In this case, a request from the TSCTSF may be transmitted to the AMF2 via the PCF. The AMF2 may apply the request to the gNB2 to which the UE2 belongs, thereby applying only a sync service using RAN technologies, such as SIB broadcasting and RRC signaling, between the gNB2 and the UE2. Alternatively, the TSCTSF may additionally apply a (g)PTP-based sync service by transmitting signals to an NW-TT and a DS-TT, such that sync messages are periodically transferred from an NW-TT of the UPF2 to a DS-TT of the UE2 simultaneously with the sync service using RAN technologies. This process is as described with reference to FIG. 1.

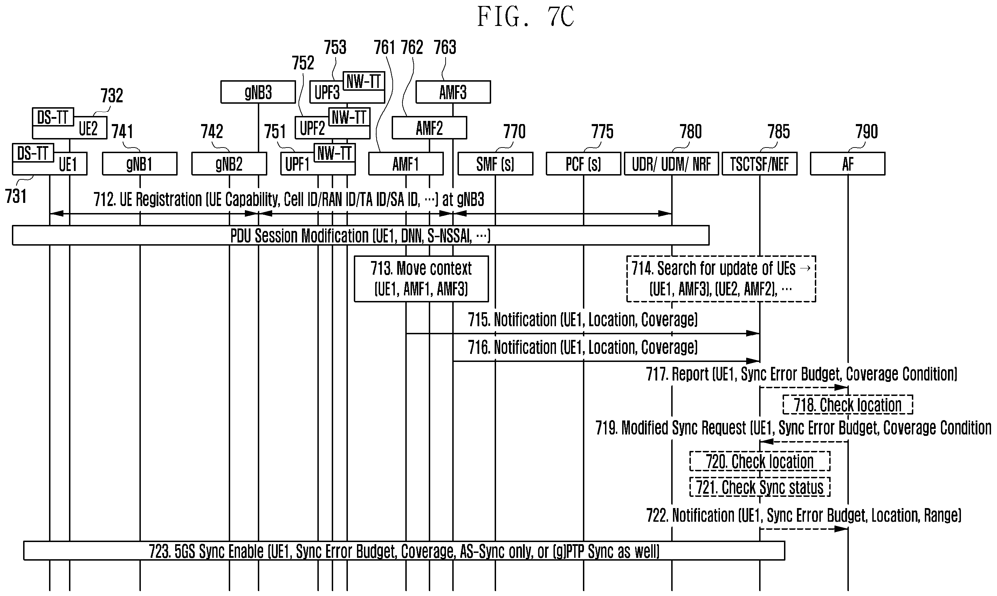

FIG. 7C is a signal flow diagram illustrating an operation of an area of interest subscription for each UE associated with a DNN/S-NSSAI targeted for a sync service when an All-AMF indication is applied and an inter-AMF handover occurs.

With reference to FIG. 7C, when the UE moves beyond an area of the AMF, subscription/de-subscription signaling for an area of interest subscription may occur simultaneously. In this case, as the number of UEs having PDU sessions associated with a DNN/S-NSSAI combination increases or the mobility of the UEs increases, a signaling load may also increase, which may cause a problem. Through the process of FIG. 7A, when a sync service has a coverage condition and targets UEs having PDU sessions associated with a DNN/S-NSSAI combination, the 5GS may discover AMFs at once and perform AoI subscription, such that AoI subscription/de-subscription is not performed for the corresponding UEs during a handover within the coverage condition. In performing the AoI subscription, an All-AMF indication may be additionally applied so as to prevent AoI subscription/de-subscription for the corresponding UEs during a handover within the coverage condition.

In step 712, the UE1 731 may move from the gNB1 741 to a gNB3 743 and from an area of the AMF1 761 to an area of the AMF3 763, and perform registration with the AMF3 763. Because a change in the UPF and the SMF may occur, a PDU session modification for the UE1 associated with a DNN/S-NSSAI may also be performed.

In step 713, UE context information may be transferred between the AMF1 761 and the AMF3 763 according to a handover of the UE1.

In step 714, a UDM/UDR 780 may be updated according to an AMF change of the UE1 and notify the TSCTSF 785 of the update. That is, the UDM/UDR 780 may notify the TSCTSF 785 that a registration location of the UE1 731 has been changed from the AMF1 761 to the AMF3 763.

In step 715, the AMF1 761 may notify the TSCTSF 785 of a location change of the UE1. In this case, the notification may include the UE1 and coverage (a list of TAs). In this case, unlike FIG. 2B, the TSCTSF does not unsubscribe from a location notification subscription for the UE1 with the AMF1.

In step 716, the AMF3 763 may notify the TSCTSF/NEF 785 of the current location of the UE1, whether the location satisfies the coverage condition, and subscription status of the UE1. In this case, unlike FIG. 2B, no signaling is performed for the TSCTSF to request a location notification subscription for the UE1 from the AMF3.

In step 717, the TSCTSF/NEF 785 may report a current status of the sync request to the AF 790. In this case, the report may include the UE1, a sync error budget, a coverage condition, and the like.

In step 718, the AF 790 may identify again whether the sync error budget or the coverage condition is satisfied using the report of step 717, and if necessary, transmit a modified sync service request to the TSCTSF/NEF 785.

In step 719, the AF 790 may transmit a modified sync service request to the TSCTSF/NEF 785. In this case, the modified sync service request may include the UE1, a sync error budget, and a coverage condition.

In step 720, the TSCTSF 785 may identify again whether the coverage condition is satisfied.

In step 721, the TSCTSF 785 may check again whether the requested sync error budget may be satisfied through the sync error budget of the RAN transferred via the AMF1 761.

In step 722, the TSCTSF/NEF 785 may notify the AF 790 of the current status of the sync request. In this case, the notification may include the UE1, a sync error budget, a location, a range, and the like.

In step 723, the TSCTSF 785 may apply a sync service to the UE1. In this case, a request from the TSCTSF may be transmitted to the AMF via the PCF. The AMF may apply the request to the gNB1 to which the UE1 belongs, thereby applying only a sync service using RAN technologies, such as SIB broadcasting and RRC signaling, between the gNB1 and the UE1. Alternatively, the TSCTSF may additionally apply a (g)PTP-based sync service by transmitting signals to an NW-TT and a DS-TT, such that sync messages are periodically transferred from an NW-TT of the UPF1 to a DS-TT of the UE1 simultaneously with the sync service based on RAN technologies. This process is as described with reference to FIG. 1.

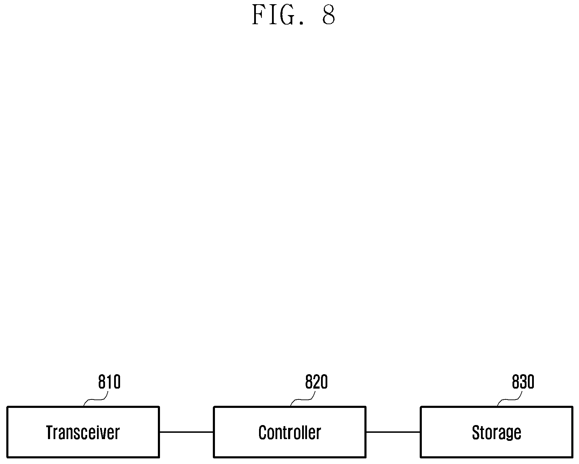

FIG. 8 is a block diagram illustrating a structure of a UE according to an embodiment of the disclosure.

With reference to FIG. 8, the base station may include a transceiver 810, a controller 820, and a storage 830. In the disclosure, the controller may be defined as a circuit, an application-specific integrated circuit, or at least one processor.

The transceiver 810 may transmit and receive signals to and from other network entities. The transceiver 810 may, for example, transmit system information to a UE and transmit a synchronization signal or a reference signal.

The controller 820 may control the overall operation of the base station according to the embodiment proposed in the disclosure. For example, the controller 820 may control the signal flow between each block to perform the operation according to the signal flow diagram described above. Specifically, the controller 820 may control the operation proposed in the disclosure to transmit residual system information (RMSI) in a multi-beam-based system according to the embodiment of the disclosure.

The storage 830 may store at least one of information transmitted and received through the transceiver 810 or information generated through the controller 820.

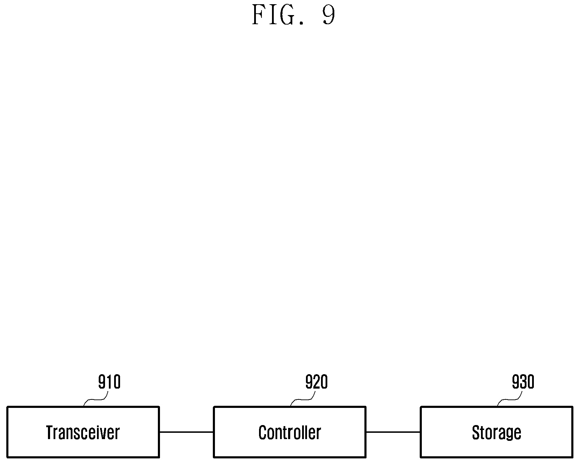

FIG. 9 is a block diagram illustrating a structure of a network entity according to an embodiment of the disclosure.

With reference to FIG. 9, the network entity may include a transceiver 910, a controller 920, and a storage 930. In the disclosure, the controller may be defined as a circuit, an application-specific integrated circuit, or at least one processor.

The transceiver 910 may transmit and receive signals to and from other network entities. The transceiver 910 may, for example, transmit system information to a UE and transmit a synchronization signal or a reference signal.

The controller 920 may control the overall operation of the base station according to the embodiment proposed in the disclosure. For example, the controller 920 may control the signal flow between each block to perform the operation according to the signal flow diagram described above. Specifically, the controller 920 may control the operation proposed in the disclosure to transmit residual system information (RMSI) in a multi-beam-based system according to the embodiment of the disclosure.

The storage 930 may store at least one of information transmitted and received through the transceiver 910 or information generated through the controller 920.

Methods according to the embodiments described in the claims or the specification of the disclosure may be implemented in the form of hardware, software, or a combination of hardware and software.

In the case of being implemented in software, a computer readable storage medium storing one or more programs (software modules) may be provided. One or more programs stored in the computer readable storage medium are configured for execution by one or more processors in an electronic device. The one or more programs include instructions for causing the electronic device to execute methods according to embodiments described in the claims or specification of the disclosure.

Such programs (software modules, software) may be stored in a random access memory, a non-volatile memory including a flash memory, a read only memory (ROM), an electrically erasable programmable ROM (EEPROM), a magnetic disc storage device, a compact disc-ROM (CD-ROM), digital versatile discs (DVDs), any other form of optical storage device, or a magnetic cassette. Alternatively, the programs may be stored in a memory composed of a combination of some or all thereof. Further, each constitution memory may be included in the plural.

Further, the program may be stored in an attachable storage device that may access through a communication network such as the Internet, Intranet, local area network (LAN), wide LAN (WLAN), or storage area network (SAN), or a communication network composed of a combination thereof. Such a storage device may access a device implementing an embodiment of the disclosure through an external port. Further, a separate storage device on a communication network may access a device implementing the embodiment of the disclosure.

In the specific embodiments of the disclosure described above, components included in the disclosure are expressed in the singular or plural according to the presented specific embodiments. However, the singular or plural expression is appropriately selected for a situation presented for convenience of description, and the disclosure is not limited to the singular or plural components, and even if a component is represented in the plural, it may be composed of the singular, or even if a component is represented in the singular, it may be composed of the plural.

Although specific embodiments have been described in the detailed description of the disclosure, various modifications are possible without departing from the scope of the disclosure. Therefore, the scope of the disclosure should not be limited to the described embodiments, but should be defined by the following claims and their equivalents.

## Claims

1. A method performed by a time sensitive communication time synchronization function (TSCTSF) in a wireless communication system, the method comprising:
receiving, from an application function (AF), a messsage associated with a synchronization;
discovering at least one access and mobility management function (AMF);
transmitting, to the at least one AMF, a first message including information on user equipments (UEs); and
receiving, from the at least one AMF, a second message including information on an area of interest (AOI) based on the information on UEs.

2. The method of claim 1, wherein the information on UEs comprises at least one of a UE identifier (ID) list, a group ID, or a data network name (DNN)/single network slice selection assistance information (S-NSSAI).

3. The method of claim 1, wherein the discovering:
discovering the at least one AMF based on coverage conditions included in the message.

4. The method of claim 1, wherein the information on UEs comprises information on all AMFs.

5. A method performed by an access and mobility management function (AMF) in a wireless communication system, the method comprising:
receiving, from a time sensitive communication time synchronization function (TSCTSF), a first message including information on user equipments (UEs);
identifying whether conditions included in the information on UEs are satisfied; and
transmitting, to the TSCTSF, a second message including information on an area of interest (AOI) based on the information on UEs,
wherein the AMF is discovered, and
wherein a messsage associated with a synchronization is transmitted from an application function (AF) to the TSCTSF.

6. The method of claim 5, wherein the information on UEs comprises at least one of a UE identifier (ID) list, a group ID, or a data network name (DNN)/single network slice selection assistance information (S-NSSAI).

7. The method of claim 5, wherein the AMF is discovered based on coverage conditions included in the message.

8. The method of claim 5, wherein the information on UEs comprises information on all AMFs.

9. A time sensitive communication time synchronization function (TSCTSF) in a wireless communication system, the TSCTSF comprising:
a transceiver configured to transmit and receive at least one signal; and
a controller coupled to the transceiver,
wherein the controller is configured to:
receive, from an application function (AF), messsage associated with a synchronization,
discover at least one access and mobility management function (AMF),
transmit, to the at least one AMF, a first message including information on user equipments (UEs), and
receive, from the at least one AMF, a second message including information on an area of interest (AOI) based on the information on UEs.

10. The TSCTSF of claim 9, wherein the information on UEs comprises at least one of a UE identifier (ID) list, a group ID, or a data network name (DNN)/single network slice selection assistance information (S-NSSAI).

11. The TSCTSF of claim 9, wherein the controller is further configured to discover the at least one AMF based on coverage conditions included in the message.

12. The TSCTSF of claim 9, wherein the information on UEs comprises information on all AMFs.

13. An access and mobility management function (AMF) in a wireless communication system, the AMF comprising:
a transceiver configured to transmit and receive at least one signal; and
a controller coupled to the transceiver,
wherein the controller is configured to:
receive, from a time sensitive communication time synchronization function (TSCTSF), a first message including information on user equipments (UEs),
identify whether conditions included in the information on UEs are satisfied, and
transmit, to the TSCTSF, a second message including information on an area of interest (AOI) based on the information on UEs,
wherein the AMF is discovered , and
wherein a messsage associated with a synchronization is transmitted from an application function (AF) to the TSCTSF.

14. The AMF of claim 13, wherein the information on UEs comprises at least one of a UE identifier (ID) list, a group ID, or a data network name (DNN)/single network slice selection assistance information (S-NSSAI).

15. The AMF of claim 13, wherein the AMF is discovered based on coverage conditions included in the message.
